# EUROPEAN PATENT APPLICATION

(11) **EP 4 614 282 A1**
(43) Date of publication of application: **10.09.2025**
(21) Application number: 23900857.6
(22) Date of filing: 27.09.2023
(51) Int. Cl.: G06F 3/01, G06V 40/18, G06F 3/04842, G06F 3/0481, H04W 4/80, G06F 3/00, G06F 1/16

(54) **WEARABLE DEVICE AND METHOD FOR DISPLAYING USER INTERFACE RELATED TO CONTROL OF EXTERNAL ELECTRONIC DEVICE**

(30) Priority: 06.12.2022 KR 20220169194
(71) Applicant: Samsung Electronics Co., Ltd., Suwon-si, Gyeonggi-do 16677 (KR)
(72) Inventor: LEE, Bona, Suwon-si Gyeonggi-do 16677 (KR); OH, Younghak, Suwon-si Gyeonggi-do 16677 (KR)
(74) Representative: Appleyard Lees IP LLP
(86) International application number: PCT/KR2023/015049
(87) International publication number: WO 2024/122836

(57) **Abstract**

A processor of a wearable device, according to one embodiment, may obtain a frame by using a camera while media content is displayed on a display area of a display. The processor may identify, in the frame, a grip shape of a body part with respect to an external object on the basis of identifying the body part in contact with the external object. The processor may change the distance of the media content displayed away from the wearable device by selecting either a first distance or a second distance less than the first distance according to the grip shape. The present document may relate to a metaverse service for enhancing the interconnectivity between an actual object and a virtual object. For example, the metaverse service may be provided through a fifth generation (5G) and/or sixth generation (6G) network.

## Description

### [Technical Field]

The present disclosure relates to a wearable device and a method for displaying a user interface related to control of an external electronic device.

### [Background Art]

In order to provide an enhanced user experience, an electronic device that provides an augmented reality (AR) service that displays information generated by a computer in conjunction with an external object in a real-world are being developed. The electronic device may be a wearable device that may be worn by a user. For example, the electronic device may be AR glasses and/or a head-mounted device (HMD).

### [Disclosure]

### [Technical Solution]

According to an embodiment, a wearable device may comprise communication circuitry, a camera, a display, memory storing instructions, and a processor. The instructions may be configured to, when executed by the processor, cause the wearable device to establish, by using the communication circuitry, a communication link with an external electronic device viewable through the display. The instructions may be configured to, when executed by the processor, cause the wearable device to obtain information with respect to a gaze toward a portion of the display by using the camera. The instructions may be configured to, when executed by the processor, cause the wearable device to display, in response to identifying the gaze adjacent to the external electronic device based on the information, a screen for controlling the external electronic device. The instructions may be configured to, when executed by the processor, cause the wearable device to display, in the screen, a visual object associated with at least one function which is selected among a plurality of functions based on a position of the gaze with respect to the external electronic device. The instructions may be configured to, when executed by the processor, cause the wearable device to transmit, to the external electronic device through the communication link in response to identifying an input with respect to the visual object, a signal to control the at least one function.

According to an embodiment, a method of a wearable device may comprise establishing, by using communication circuitry of the wearable device, a communication link with an external electronic device viewable through a display of the wearable device. The method may comprise obtaining information with respect to a gaze toward a portion of the display by using a camera of the wearable device. The method may comprise displaying, in response to identifying the gaze adjacent to the external electronic device based on the information, a screen for controlling the external electronic device. The method may comprise displaying, in the screen, a visual object associated with at least one function which is selected among a plurality of functions based on a position of the gaze with respect to the external electronic device. The method may comprise transmitting, to the external electronic device through the communication link in response to identifying an input with respect to the visual object, a signal to control the at least one function.

According to an embodiment, a wearable device may comprise communication circuitry, a camera, a display, memory storing instructions, and a processor. The instructions may be configured to, when executed by the processor, cause the wearable device to establish, by using the communication circuitry, a communication link with an external electronic device viewable through the display. The instructions may be configured to, when executed by the processor, cause the wearable device to display a first visual object associated with the external electronic device in an area extended from an edge of the external electronic device viewable through the display. The instructions may be configured to, when executed by the processor, cause the wearable device to, in response to identifying a gaze toward the first visual object by using the camera, display a second visual object representing a screen provided by the external electronic device in the area. The instructions may be configured to, when executed by the processor, cause the wearable device to transmit, to the external electronic device through the communication link, in response to an input with respect to the second visual object, a signal to display the screen on a display of the external electronic device.

According to an embodiment, a method of a wearable device may comprise establishing, by using communication circuitry of the wearable device, a communication link with an external electronic device viewable through a display of the wearable device. The method may comprise displaying a first visual object associated with the external electronic device in an area extended from an edge of the external electronic device viewable through the display. The method may comprise, in response to identifying a gaze toward the first visual object by using a camera of the wearable device, displaying a second visual object representing a screen provided by the external electronic device in the area. The method may comprise transmitting, to the external electronic device through the communication link, in response to an input with respect to the second visual object, a signal to display the screen on a display of the external electronic device.

### [Description of the Drawings]

FIG. 1 illustrates an example of an operation of displaying a screen to control an external electronic device by a wearable device according to an embodiment.
FIG. 2 illustrates an example of a block diagram of a wearable device according to an embodiment.
FIG. 3A illustrates an example of a perspective view of a wearable device according to an embodiment.
FIG. 3B illustrates an example of one or more hardware disposed in a wearable device according to an embodiment.
FIGS. 4A to 4B illustrate an example of an exterior of a wearable device according to an embodiment.
FIG. 5 illustrates an example of a flowchart with respect to a wearable device according to an embodiment.
FIG. 6 illustrates an example of an operation in which a wearable device identifies a direction of a body part of a user according to an embodiment.
FIGS. 7A to 7B illustrate an example of an operation in which a wearable device is connected with an external electronic device according to an embodiment.
FIG. 8A, FIG. 8B, FIG. 8C, FIG. 8D, and FIG. 8E illustrate an example of an operation performed by a wearable device based on identifying a gaze adjacent to an external electronic device according to an embodiment.
FIGS. 9A, 9B, and 9C illustrate an example of an operation performed by a wearable device based on identifying a gaze adjacent to an external electronic device according to an embodiment.
FIG. 10 illustrates an example of an operation performed by a wearable device based on identifying a gaze adjacent to an external electronic device according to an embodiment.
FIGS. 11A to 11B illustrate an example of an operation performed by a wearable device based on a direction of an external electronic device viewable through a display according to an embodiment.
FIGS. 12A to 12B illustrate an example of an operation performed by a wearable device based on identifying a gaze adjacent to an external electronic device according to an embodiment.
FIG. 13 illustrates an example of a signal flowchart with respect to a wearable device and an external electronic device according to an embodiment.
FIG. 14 is an exemplary diagram of a network environment associated with a metaverse service.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

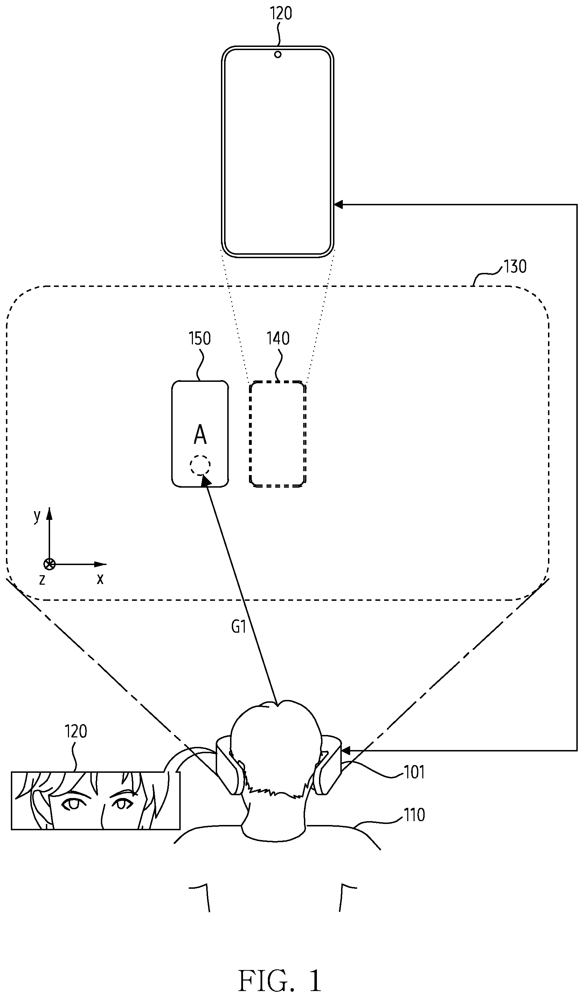

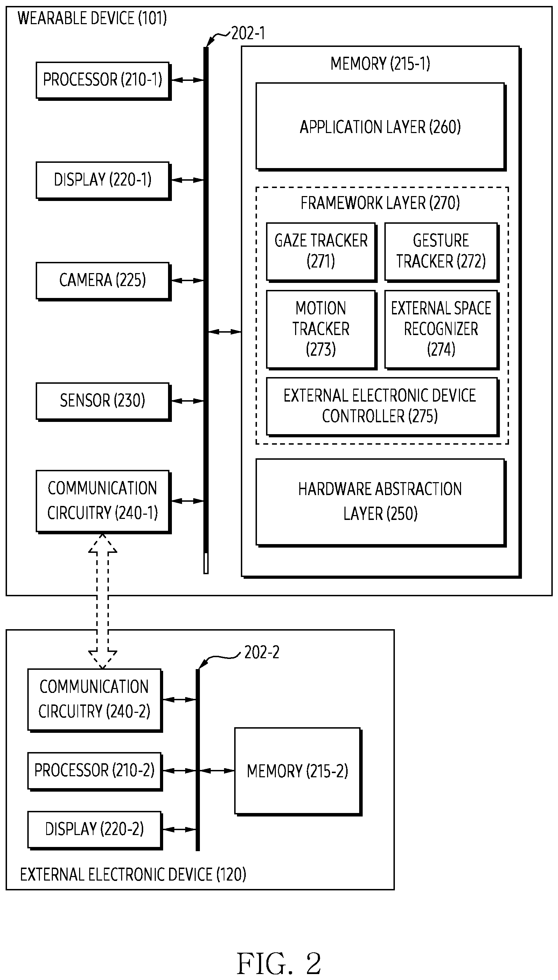

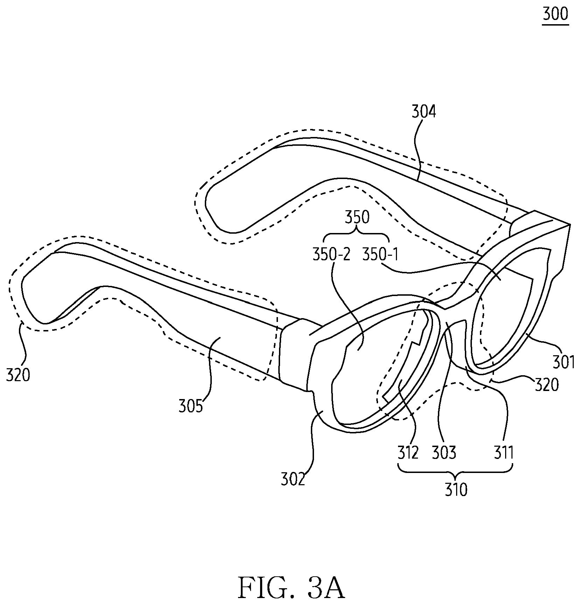

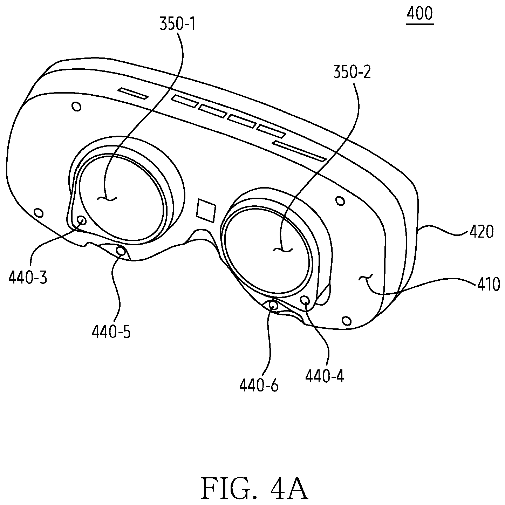

FIG. 1 illustrates an example of an operation of displaying a screen to control an external electronic device 120 by a wearable device 101 according to an embodiment. In an embodiment of FIG. 1, the wearable device 101 may include a head-mounted display (HMD) wearable on a head of a user 110. Although an external appearance of the wearable device 101 having a shape of glasses is illustrated, the embodiment is not limited thereto. An example of a structure of the wearable device 101 wearable on the head of the user 110 is described with reference to FIGS. 3A to 3B and/or 4A to 4B. One or more hardware included in the wearable device 101 are exemplarily described with reference to FIG. 2.

According to an embodiment, the wearable device 101 may execute a function associated with an augmented reality (AR) and/or a mixed reality (MR). In an embodiment of FIG. 1, in a state in which the user 110 wears the wearable device 101, the wearable device 101 may include at least one lens disposed adjacent to eyes of the user 110. The wearable device 101 may combine ambient light passing through the lens with light radiated from a display of the wearable device 101. A display area of the display may be formed in the lens through which the ambient light passes. Since the wearable device 101 combines the ambient light and the light radiated from the display, the user 110 may see an image in which a real object recognized by the ambient light and a virtual object formed by the light radiated from the display are mixed.

According to an embodiment, the wearable device 101 may execute a function associated with a video see-through (VST) and/or a virtual reality (VR). Referring to FIG. 1, in the state in which the user 110 wears the wearable device 101, the wearable device 101 may include a housing covering the eyes of the user 110. The wearable device 101 may include a display positioned on a first surface toward the eyes in the state. The wearable device 101 may include a camera positioned on a second surface opposite to the first surface. By using the camera, the wearable device 101 may obtain frames including the ambient light. The wearable device 101 may cause the user 110 to recognize the ambient light through the display, by outputting the frames in the display positioned on the first surface. A display area of the display positioned on the first surface may be formed by one or more pixels included in the display. The wearable device 101 may cause the user 110 to recognize the virtual object together with the real object recognized by the ambient light, by synthesizing the virtual object in the frames outputted through the display.

Referring to FIG. 1, the exemplary state in which the user 110 wearing the wearable device 101 looks at the external electronic device 120 is illustrated. In the state of FIG. 1, the user 110 may see the external electronic device 120 through a display area 130 overlapping a field-of-view (FoV). For example, in case that the wearable device 101 forms the display area 130 on the lens configured to pass through the external light, the user 110 may see the external electronic device 120 as the external light reflected from the external electronic device 120 is propagated toward the eyes of the user 110 through the display area 130. For example, in case that the wearable device 101 obtains an image and/or a video with respect to the external light, by using a camera, the wearable device 101 may display the image and/or the video including the external electronic device 120 in the display area 130 of the display covering the two eyes of the user 110. In the exemplary state of FIG. 1, the user 110 may see the external electronic device 120 through a portion 140 of the display area 130.

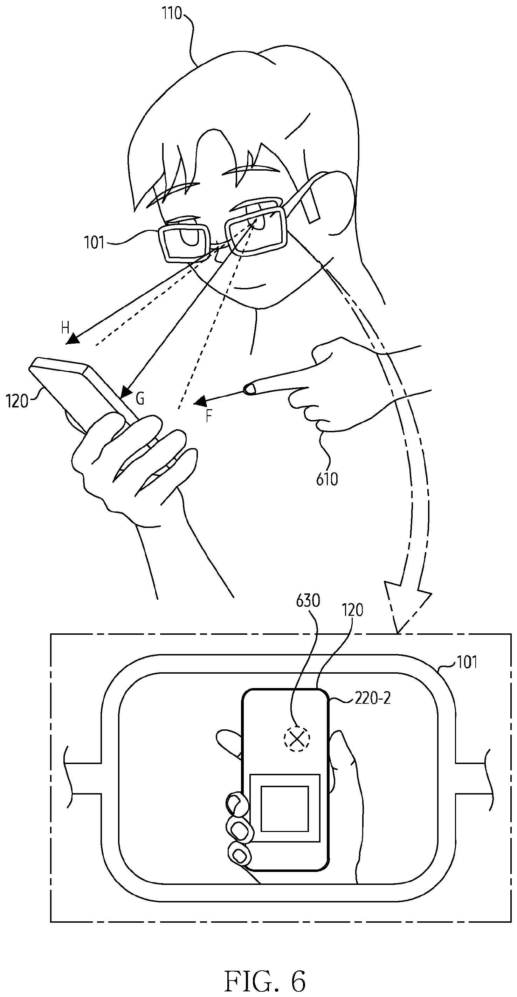

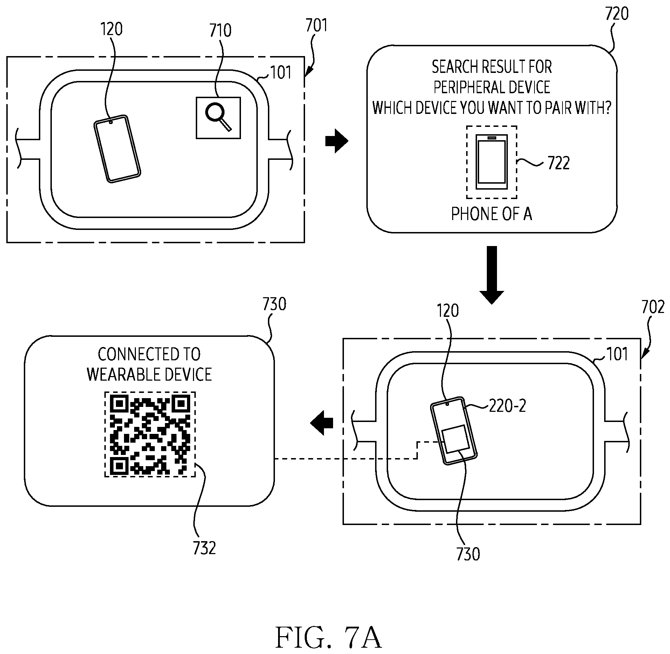

Referring to FIG. 1, according to an embodiment, the wearable device 101 may display a screen 150 to control the external electronic device 120 at a position adjacent to the portion 140 on which the external electronic device 120 is displayed. The wearable device 101 may display the screen 150 based on a direction G1 of the gaze toward a portion of the display area 130. In order to identify the direction G1 of the gaze, the wearable device 101 may obtain an image 120 with respect to the eyes of the user 110. In the image 120, based on a direction and/or a position of a pupil, the wearable device 101 may track the direction G1 of the gaze. For example, based on identifying the direction G1 of the gaze adjacent to the portion 140 where the external electronic device 120 is viewable, the wearable device 101 may display the screen 150. While establishing a communication link with the external electronic device 120, the wearable device 101 may compare the direction G1 of the gaze with the portion 140 where the external electronic device 120 is viewable. An operation performed by the wearable device 101 to establish the communication link with the external electronic device 120 will be described with reference to FIG. 6, and FIG.7A to FIG. 7B.

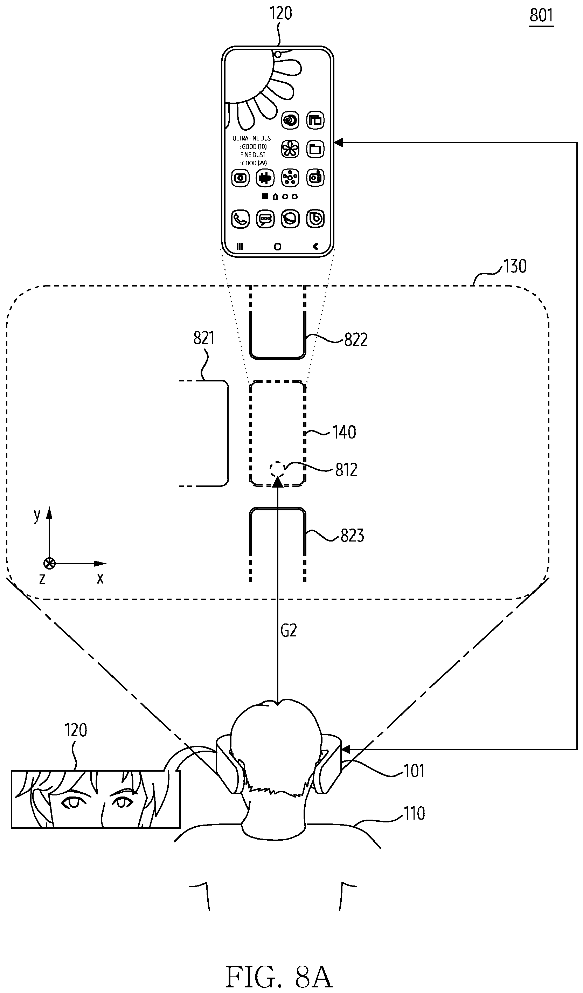

According to an embodiment, in a state of being connected to the external electronic device 120, the wearable device 101 may display the screen 150 to control at least one of different functions supported by the external electronic device 120. The screen 150 may be displayed adjacent to the portion 140 where the external electronic device 120 is viewable in the display area 130. The function executable by the screen 150 may be selected by a positional relationship between the portion 140 in the display area 130 where the external electronic device 120 is viewable and the direction G1 of the gaze. In an embodiment of FIG. 1, based on identifying the direction G1 of an adjacent gaze adjacent to the portion 140 along an -x axis direction, the wearable device 101 may display the screen 150 to switch an application executed by the external electronic device 120. For example, based on the direction G1 of an adjacent gaze along a +y-axis direction, the wearable device 101 may display at least one notification message generated from the external electronic device 120 and/or a control panel to control a state of the external electronic device 120. For example, based on the direction G1 of an adjacent gaze along an -y axis direction, the wearable device 101 may display a pop-up window to execute a preset function such as payment. An operation in which the wearable device 101 displays different screens to execute the different functions of the external electronic device 120, based on the positional relationship between the portion 140 and the direction G1 of the gaze will be described with reference to FIGS. 8A to 8E, 9A to 9C, 10, and 11A to 11B.

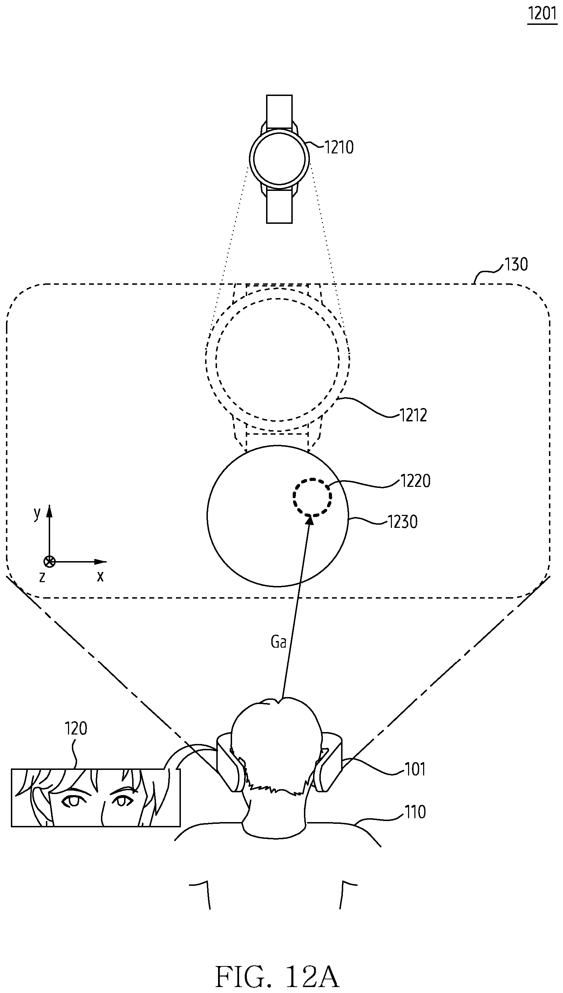

Although the operation of the wearable device 101 communicating with the external electronic device 120 having the external appearance of a mobile phone is exemplarily described, the embodiment is not limited thereto. According to an embodiment, based on the direction G1 of the gaze adjacent to a smart watch and/or a home appliance, the wearable device 101 may display a screen to control the smart watch and/or the home appliance. According to an embodiment, an operation in which the wearable device 101 communicates with the smart watch will be described with reference to FIGS. 12A to 12B.

According to an embodiment, the wearable device 101 may display the screen 150 in which the external electronic device 120 displays on the display of the external electronic device 120 based on a directional gesture adjacent to the portion 140 in the display area 130 where the external electronic device 120 is viewable. For example, based on identifying a gesture (e.g., a swipe gesture) that is dragged toward a +x-axis direction on the display of the external electronic device 120, the external electronic device 120 may display the screen 150 on the display of the external electronic device 120. The gesture may represent an operation of moving the screen 150 disposed in the -x axis direction of the display of the external electronic device 120 into the display of the external electronic device 120. According to an embodiment, the wearable device 101 may represent the direction of the screen 150 represented by the gesture through the display area 130, by displaying the screen 150 adjacent to the portion 140 where the external electronic device 120 is viewable and the -x axis direction.

As described above, the wearable device 101 according to an embodiment may display the screen 150 corresponding to the directional gesture supported by the external electronic device 120 to control the external electronic device 120 in an area adjacent to the portion 140 where the external electronic device 120 is viewable and having a direction corresponding to the directional gesture. For example, the screen 150 displayed by the directional gesture toward the +x axis direction on the display of the external electronic device 120 may be displayed adjacent to the -x axis direction of the portion 140 of the display area 130 where the external electronic device 120 is viewable. The wearable device 101 may support the user 110 to indirectly control the external electronic device 120, by using the screen 150. For example, the user 110 wearing the wearable device 101 may execute a function supported by the external electronic device 120 without directly touching the external electronic device 120.

Hereinafter, one or more hardware included in the wearable device 101 according to an embodiment will be described with reference to FIG. 2.

FIG. 2 illustrates an example of a block diagram of a wearable device 101 according to an embodiment. The wearable device 101 of FIG. 2 may include the wearable device 101 of FIG. 1.

According to an embodiment, the wearable device 101 may include at least one of a processor 210-1, memory 215-1, a display 220-1, a camera 225, a sensor 230, or communication circuitry 240-1. The processor 210-1, the memory 215-1, the display 220-1, the camera 225, and the sensor 230, and the communication circuitry 240-1 may be electronically and/or operably coupled with each other by an electronical component such as a communication bus 202-1. Hereinafter, hardware being operably coupled may mean that a direct connection or an indirect connection between hardware is established by wire or wirelessly so that second hardware is controlled by first hardware among the hardware. Although illustrated based on different blocks, the embodiment is not limited thereto, and a portion (e.g., at least a portion of the processor 210-1, the memory 215-1, and the communication circuitry 240-1) of the hardware of FIG. 2 may be included in a single integrated circuit such as a system on a chip (SoC). A type and/or the number of the hardware included in the wearable device 101 is not limited as illustrated in FIG. 2. For example, the wearable device 101 may include only a portion of a hardware component illustrated in FIG. 2.

In an embodiment, the processor 210-1 of the wearable device 101 may include hardware to process data based on one or more instructions. The hardware to process the data may include, for example, an arithmetic and logic unit (ALU), a floating point unit (FPU), a field programmable gate array (FPGA), a central processing unit (CPU), and/or an application processor (AP). The processor 210-1 may have a structure of a single-core processor, or have a structure of a multi-core processor such as a dual core, a quad core, or a hexa core.

In an embodiment, the memory 215-1 of the wearable device 101 may include the hardware component to store data and/or an instruction inputted to and/or outputted from the processor 210-1 of the wearable device 101. The memory 215-1 may include, for example, volatile memory such as random-access memory (RAM), and/or non-volatile memory such as read-only memory (ROM). For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, a hard disk, a compact disk, a solid state drive (SSD), and an embedded multi media card (eMMC).

In an embodiment, the display 220-1 of the wearable device 101 may output visualized information (e.g., a screen of FIGS. 1, 6, 7A to 7B, 8A to 8E, 9A to 9C, 10, 11A to 11B, and 12A to 12B) to a user (e.g., the user 110 of FIG. 1). For example, the display 220-1 may output the visualized information to the user, by being controlled by the processor 210-1 including circuitry such as a graphic processing unit (GPU). The display 220-1 may include a flat panel display (FPD), and/or electronic paper. The FPD may include a liquid crystal display (LCD), a plasma display panel (PDP), and/or one or more light emitting diodes (LEDs). The LED may include an organic LED (OLED). The display 220-1 of FIG. 2 may include at least one display 350 to be described later with reference to FIGS. 3A to 3B and/or FIGS. 4A to 4B.

In an embodiment, the camera 225 of the wearable device 101 may include one or more optical sensors (e.g., a charged coupled device (CCD) sensor and a complementary metal oxide semiconductor (CMOS) sensor) generating an electrical signal indicating a color and/or brightness of light. A plurality of optical sensors included in the camera 225 may be disposed in a shape of a 2 dimensional array. The camera 225 may generate 2 dimensional frame data corresponding to the light reaching the optical sensors of the 2 dimensional array by substantially simultaneously obtaining electrical signals of each of the plurality of optical sensors. For example, photo data captured by using the camera 225 may mean a 2 dimensional frame data obtained from the camera 225. For example, video data captured by using the camera 225 may mean a sequence of a plurality of 2 dimensional frame data obtained from the camera 225 according to a frame rate. The camera 225 may be disposed toward a direction in which the camera 225 receives the light, and may further include flash light to output the light toward the direction. Although the camera 225 is illustrated based on a single block, the number of the cameras 225 included in the wearable device 101 is not limited to the embodiment. The wearable device 101 may include one or more cameras, such as one or more cameras 340 to be described below with reference to FIGS. 3A to 3B and/or 4A to 4B.

According to an embodiment, the sensor 230 of the wearable device 101 may generate electronic information that may be processed by the processor 210-1 and/or the memory 215-1 of the wearable device 101 from non-electronic information associated with the wearable device 101. The information may be referred to as sensor data. The sensor 230 may include a global positioning system (GPS) sensor to detect a geographic losition of the wearable device 101, an image sensor, an illumination sensor, and/or a time-of-flight (ToF) sensor, and an inertial measurement unit (IMU) to detect a physical motion of the wearable device 101.

In an embodiment, the communication circuitry 240-1 of the wearable device 101 may include the hardware component to support transmission and/or reception of the electrical signal between the wearable device 101 and an external electronic device 201. For example, the communication circuitry 240-1 may include at least one of a modem (MODEM), an antenna, and an optical/electronic (O/E) converter. The communication circuitry 240-1 may support the transmission and/or the reception of the electrical signal based on various types of protocols such as Ethernet, a local area network (LAN), a wide area network (WAN), wireless fidelity (WiFi), Bluetooth, Bluetooth low energy (BLE), ZigBee, long term evolution (LTE), a 5G new radio (NR), and/or 6G.

Although not illustrated, according to an embodiment, the wearable device 101 may include output means to output the information in a different shape other than a visualized shape. For example, the wearable device 101 may include a speaker to output an acoustic signal. For example, the wearable device 101 may include a motor to provide haptic feedback based on vibration.

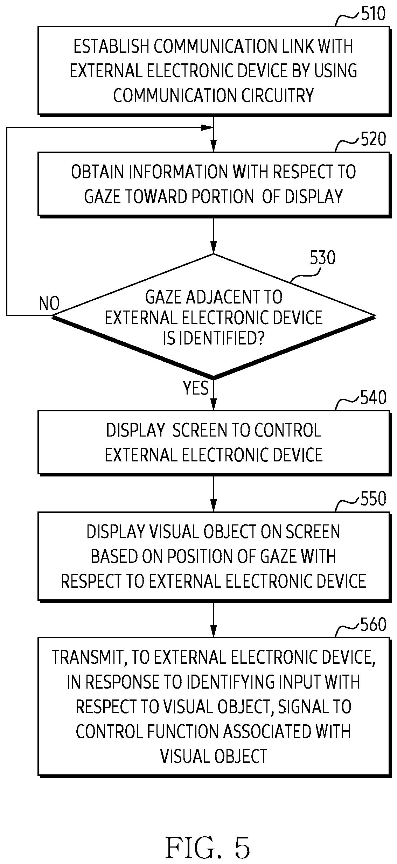

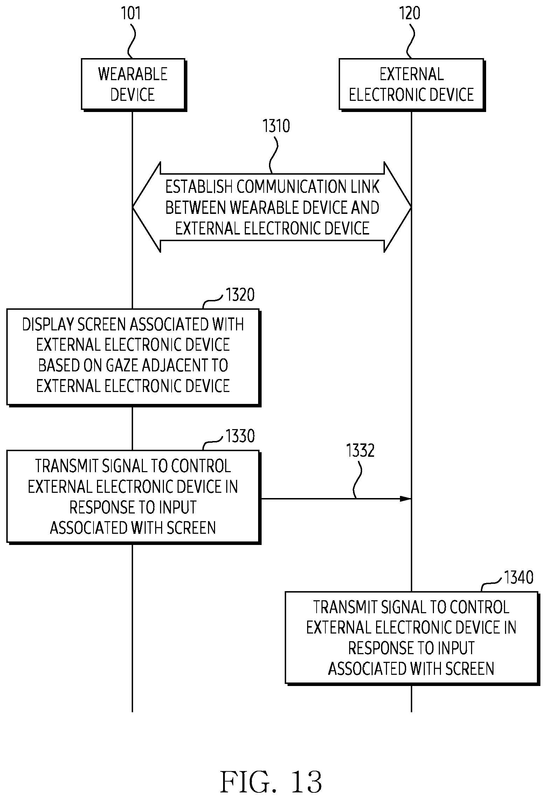

Referring to an embodiment of FIG. 2, in the memory 215-1 of the wearable device 101, one or more instructions (or commands) indicating a calculation and/or an operation to be performed by the processor 210-1 of the wearable device 101 on data may be stored. A set of one or more instructions may be referred to as a program, firmware, an operating system, a process, a routine, a sub-routine, and/or an application. Hereinafter, the application being installed in an electronic device (e.g., the wearable device 101) may mean that one or more instructions provided in a shape of the application are stored in the memory 215-1, and the one or more applications are stored in a format (e.g., a file having an extension preset by the operating system of the wearable device 101) that is executable by a processor of the electronic device. According to an embodiment, the wearable device 101 may perform an operation of FIG. 5, and/or FIG. 13, by executing the one or more instructions stored in the memory 215-1.

Referring to FIG. 2, programs installed in the wearable device 101 may be classified as any one layer among different layers including an application layer 260, a framework layer 270, and/or a hardware abstraction layer (HAL) 250 based on a target. For example, in the hardware abstraction layer 250, programs (e.g., a driver) designed to target the hardware (e.g., the display 220-1, the camera 225, the sensor 230, and/or the communication circuitry 240-1) of the wearable device 101 may be classified. For example, in the framework layer 270, programs (e.g., a gaze tracker 271, a gesture tracker 272, a motion tracker 273, an external space recognizer 274, and/or an external electronic device controller 275) designed to target at least one of the hardware abstraction layer 250 and/or the application layer 260 may be classified. Programs classified as the framework layer 270 may provide an application programming interface (API) that is executable, based on another program. Referring to FIG. 2, in the application layer 260, a program designed to target the user (e.g., the user 110 of FIG. 1) controlling the wearable device 101 may be classified. For example, the program classified as the application layer 260 may include at least one of a word processor application to view and/or edit a document, a video player application to play an image and/or a video, and a browsing application 263 to view media content stored in the memory 215-1. An embodiment is not limited thereto. For example, by calling the API, the program classified as the application layer 260 may cause execution of a function supported by the programs classified as the framework layer 270.

Referring to FIG. 2, the wearable device 101 may process information associated with a gaze of the user wearing the wearable device 101, based on the execution of the gaze tracker 271 in the framework layer 270. For example, the wearable device 101 may obtain an image including eyes of the user from the camera 225. Based on a position and/or a direction of a pupil included in the image, the wearable device 101 may identify the direction (e.g., the direction G1 of the gaze of FIG. 1) of the gaze of the user.

Referring to FIG. 2, the wearable device 101 may identify a motion of a preset body part including a hand, based on the execution of the gesture tracker 272 in the framework layer 270. For example, the wearable device 101 may obtain an image and/or a video including the body part from the camera 225. Based on the motion and/or a posture of the preset body part indicated by the image and/or the video, the wearable device 101 may identify the gesture performed by the preset body part.

Referring to FIG. 2, the wearable device 101 may identify the motion of the wearable device 101, based on the execution of the motion tracker 273 in the framework layer 270. In a state in which the wearable device 101 is worn by the user, the motion of the wearable device 101 may be associated with the motion of a head of the user. For example, the wearable device 101 may identify a direction of the wearable device 101 that substantially matches a direction of the head. The wearable device 101 may identify the motion of the wearable device 101, based on the sensor data of the sensor 230 including the IMU.

Referring to FIG. 2, the wearable device 101 may obtain information on an external space in which the wearable device 101 is included, or adjacent to the wearable device 101, based on the execution of the external space recognizer 274 in the framework layer 270. The wearable device 101 may obtain the information, by using the camera 225 and/or the sensor 230. Referring to FIG. 2, in a state in which the external space recognizer 274 is executed, the wearable device 101 may identify a virtual space mapped to the external space, based on the information obtained based on the external space recognizer 274. Based on the execution of the external space recognizer 274, the wearable device 101 may identify a position and/or a direction of the wearable device 101 in the external space. For example, based on the execution of the external space recognizer 274 and/or the motion tracker 273, the wearable device 101 may perform simultaneous localization and mapping (SLAM) to recognize the external space and the position of the wearable device 101 in the external space.

According to an embodiment, the wearable device 101 may communicate with the external electronic device 120, by using the communication circuitry 240-1. The wearable device 101 may control the external electronic device 120, by communicating with the external electronic device 120. Referring to FIG. 2, the external electronic device 120 may include at least one of a processor 210-2, memory 215-2, a display 220-2, or communication circuitry 240-2. The processor 210-2, the memory 215-2, the display 220-2, and the communication circuitry 240-2 may be connected by an electronical component such as a communication bus 202-2. Each of the processor 210-2, the memory 215-2, the display 220-2, and the communication circuitry 240-2 of the external electronic device 120 may correspond to each of the processor 210-1, the memory 215-1, the display 220-1, and the communication circuitry 240-1 of the wearable device 101. Hereinafter, in order to reduce repetition of a description, among the description of the processor 210-2, the memory 215-2, the display 220-2, and the communication circuitry 240-2, the overlapping description of the processor 210-1, the memory 215-1, the display 215-1, and the communication circuitry 240-1 of the wearable device 101 may be omitted.

Referring to FIG. 2, the wearable device 101 may transmit a signal to control the external electronic device 120 connected through the communication circuitry 240-1 based on the execution of the external electronic device controller 275. The wearable device 101 may establish a communication link between the external electronic device 120 and the wearable device 101, by using the communication circuitry 240-1. By using the communication link, the wearable device 101 may obtain information to display a screen (e.g., the screen 150 of FIG. 1) to control the external electronic device 120 on the display 220-1 from the external electronic device 120. The wearable device 101 may transmit a signal to execute at least one function associated with an input to the external electronic device 120 based on the input to the screen.

According to an embodiment, the wearable device 101 may establish the communication link with the external electronic device 120 viewable through the display 220-1, by using the communication circuitry 240-1. The wearable device 101 may obtain information with respect to a gaze toward a portion of the display 220-1, by using the camera 225. The wearable device 101 may display, in response to identifying the gaze adjacent to the external electronic device 120 based on the information, the screen to control the external electronic device 120. The screen may be identified by the external electronic device controller 275 based on a navigation model (e.g., information architecture (IA)) between screens provided by the external electronic device 120. In the screen displayed by the wearable device 101, the wearable device 101 may display a visual object associated with at least one function which is selected among a plurality of functions based on the position of the gaze with respect to the external electronic device 120. The wearable device 101 may transmit, to the external electronic device 120 through the communication link in response to identifying an input to the visual object, a signal to control the at least one function.

As described above, according to an embodiment, the wearable device 101 may control the external electronic device 120, by using the direction of the gaze tracked by the gaze tracker 271. The wearable device 101 may conditionally display the visual object and/or the screen to control the external electronic device 120 by comparing the direction of the gaze and the position of the external electronic device 120 viewable through the display 220-1. In response to the input associated with the screen, the wearable device 101 may transmit the signal to execute at least one function which is selected by the input to the external electronic device 120 through the communication circuitry 240-1. Based on the signal, the wearable device 101 may support remotely controlling the external electronic device 120.

Hereinafter, an example of a form factor of the wearable device 101 according to an embodiment will be described using FIGS. 3A to 3B and/or 4A to 4B.

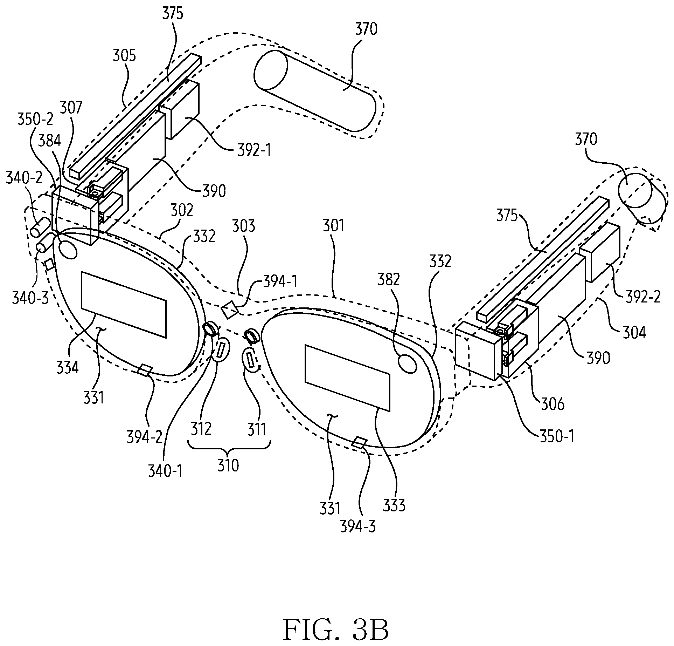

FIG. 3A illustrates an example of a perspective view of a wearable device according to an embodiment. FIG. 3B illustrates an example of one or more hardware positioned in a wearable device 300 according to an embodiment. The wearable device 300 of FIGS. 3A to 3B may include the wearable device 101 of FIGS. 1 to 2. As shown in FIG. 3A, according to an embodiment, the wearable device 300 may include at least one display 350 and a frame supporting the at least one display 350.

According to an embodiment, the wearable device 300 may be wearable on a portion of the user's body. The wearable device 300 may provide augmented reality (AR), virtual reality (VR), or mixed reality (MR) combining the augmented reality and the virtual reality to a user wearing the wearable device 300. For example, the wearable device 300 may output a virtual reality image through at least one display 350, in response to a user's preset gesture obtained through a motion recognition camera 340-2 of FIG. 3B.

According to an embodiment, the at least one display 350 in the wearable device 300 may provide visual information to a user. The at least one display 350 may include the display 220-1 of FIG. 2. For example, the at least one display 350 may include a transparent or translucent lens. The at least one display 350 may include a first display 350-1 and/or a second display 350-2 spaced apart from the first display 350-1. For example, the first display 350-1 and the second display 350-2 may be disposed at positions corresponding to the user's left and right eyes, respectively.

Referring to FIG. 3B, the at least one display 350 may form a display area on the lens to provide a user wearing the wearable device 300 with visual information included in ambient light passing through the lens and other visual information distinct from the visual information. The lens may be formed based on at least one of a fresnel lens, a pancake lens, or a multi-channel lens. The display area formed by the at least one display 350 may be formed on the second surface 332 of the first surface 331 and the second surface 332 of the lens. When the user wears the wearable device 300, ambient light may be transmitted to the user by being incident on the first surface 331 and being penetrated through the second surface 332. For another example, the at least one display 350 may display a virtual reality image to be combined with a reality screen transmitted through ambient light. The virtual reality image outputted from the at least one display 350 may be transmitted to eyes of the user, through one or more hardware (e.g., optical devices 382 and 384, and/or at least one waveguides 333 and 334) included in the wearable device 300.

According to an embodiment, the wearable device 300 may include waveguides 333 and 334 that transmit light transmitted from the at least one display 350 and relayed by the at least one optical device 382 and 384 by diffracting to the user. The waveguides 333 and 334 may be formed based on at least one of glass, plastic, or polymer. A nano pattern may be formed on at least a portion of the outside or inside of the waveguides 333 and 334. The nano pattern may be formed based on a grating structure having a polygonal or curved shape. Light incident to an end of the waveguides 333 and 334 may be propagated to another end of the waveguides 333 and 334 by the nano pattern. The waveguides 333 and 334 may include at least one of at least one diffraction element (e.g., a diffractive optical element (DOE), a holographic optical element (HOE)), and a reflection element (e.g., a reflection mirror). For example, the waveguides 333 and 334 may be disposed in the wearable device 300 to guide a screen displayed by the at least one display 350 to the user's eyes. For example, the screen may be transmitted to the user's eyes through total internal reflection (TIR) generated in the waveguides 333 and 334.

According to an embodiment, the wearable device 300 may analyze an object included in a real image collected through a photographing camera 340-1, combine with a virtual object corresponding to an object that become a subject of augmented reality provision among the analyzed object, and display on the at least one display 350. The virtual object may include at least one of text and images for various information associated with the object included in the real image. The wearable device 300 may analyze the object based on a multi-camera such as a stereo camera. For the object analysis, the wearable device 300 may execute time-of-flight (ToF) and/or simultaneous localization and mapping (SLAM) supported by the multi-camera. The user wearing the wearable device 300 may watch an image displayed on the at least one display 350.

According to an embodiment, a frame may be configured with a physical structure in which the wearable device 300 may be worn on the user's body. According to an embodiment, the frame may be configured so that when the user wears the wearable device 300, the first display 350-1 and the second display 350-2 may be positioned corresponding to the user's left and right eyes. The frame may support the at least one display 350. For example, the frame may support the first display 350-1 and the second display 350-2 to be positioned at positions corresponding to the user's left and right eyes.

According to an embodiment, referring to FIG. 3A, according to an embodiment, the frame may include an area 320 at least partially in contact with the portion of the user's body in case that the user wears the wearable device 300. For example, the area 320 of the frame in contact with the portion of the user's body may include an area in contact with a portion of the user's nose, a portion of the user's ear, and a portion of the side of the user's face that the wearable device 300 contacts. According to an embodiment, the frame may include a nose pad 310 that is contacted on the portion of the user's body. When the wearable device 300 is worn by the user, the nose pad 310 may be contacted on the portion of the user's nose. The frame may include a first temple 304 and a second temple 305, which are contacted on another portion of the user's body that is distinct from the portion of the user's body.

According to an embodiment, the frame may include a first rim 301 surrounding at least a portion of the first display 350-1, a second rim 302 surrounding at least a portion of the second display 350-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the wearable device 300 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 300 may include hardware (e.g., hardware described above based on the block diagram of FIG. 2) that performs various functions. For example, the hardware may include a battery module 370, an antenna module 375, optical devices 382 and 384, speakers 392-1 and 392-2, microphones 394-1, 394-2, and 394-3, a depth sensor module (not illustrated), and/or a printed circuit board 390. Various hardware may be disposed in the frame.

According to an embodiment, the microphones 394-1, 394-2, and 394-3 of the wearable device 300 may obtain a sound signal, by being disposed on at least a portion of the frame. The first microphone 394-1 disposed on the nose pad 310, the second microphone 394-2 disposed on the second rim 302, and the third microphone 394-3 disposed on the first rim 301 are illustrated in FIG. 3B, but the number and disposition of the microphone 394 are not limited to an embodiment of FIG. 3B. In a case that the number of the microphone 394 included in the wearable device 300 is two or more, the wearable device 300 may identify a direction of the sound signal by using a plurality of microphones disposed on different portions of the frame.

According to an embodiment, the optical devices 382 and 384 may transmit a virtual object transmitted from the at least one display 350 to the wave guides 333 and 334. For example, the optical devices 382 and 384 may be projectors. The optical devices 382 and 384 may be disposed adjacent to the at least one display 350 or may be included in the at least one display 350 as a portion of the at least one display 350. The first optical device 382 may correspond to the first display 350-1, and the second optical device 384 may correspond to the second display 350-2. The first optical device 382 may transmit light outputted from the first display 350-1 to the first waveguide 333, and the second optical device 384 may transmit light outputted from the second display 350-2 to the second waveguide 334.

In an embodiment, a camera 340 may include an eye tracking camera (ET CAM) 340-1, a motion recognition camera 340-2 and/or the photographing camera 340-3. The photographing camera 340-3, the eye tracking camera 340-1, and the motion recognition camera 340-2 may be disposed at different positions on the frame and may perform different functions. The photographing camera 340-3, the eye tracking camera 340-1, and the motion recognition camera 340-2 may be an example of the camera 225 of FIG. 2. The eye tracking camera 340-1 may output data indicating a gaze of the user wearing the wearable device 300. For example, the wearable device 300 may detect the gaze from an image including the user's pupil, obtained through the eye tracking camera 340-1. An example in which the eye tracking camera 340-1 is disposed toward the user's right eye is illustrated in FIG. 3B, but the embodiment is not limited thereto, and the eye tracking camera 340-1 may be disposed alone toward the user's left eye or may be disposed toward two eyes.

In an embodiment, the photographing camera 340-3 may photograph a real image or background to be matched with a virtual image in order to implement the augmented reality or mixed reality content. The photographing camera may photograph an image of a specific object existing at a position viewed by the user and may provide the image to the at least one display 350. The at least one display 350 may display one image in which a virtual image provided through the optical devices 382 and 384 is overlapped with information on the real image or background including the image of the specific object obtained by using the photographing camera. In an embodiment, the photographing camera may be disposed on the bridge 303 disposed between the first rim 301 and the second rim 302.

In an embodiment, the eye tracking camera 340-1 may implement a more realistic augmented reality by matching the user's gaze with the visual information provided on the at least one display 350, by tracking the gaze of the user wearing the wearable device 300. For example, when the user looks at the front, the wearable device 300 may naturally display environment information associated with the user's front on the at least one display 350 at a position where the user is positioned. The eye tracking camera 340-1 may be configured to capture an image of the user's pupil in order to determine the user's gaze. For example, the eye tracking camera 340-1 may receive gaze detection light reflected from the user's pupil and may track the user's gaze based on the position and movement of the received gaze detection light. In an embodiment, the eye tracking camera 340-1 may be disposed at a position corresponding to the user's left and right eyes. For example, the eye tracking camera 340-1 may be disposed in the first rim 301 and/or the second rim 302 to face the direction in which the user wearing the wearable device 300 is positioned.

The motion recognition camera 340-2 may provide a specific event to the screen provided on the at least one display 350 by recognizing the movement of the whole or portion of the user's body, such as the user's torso, hand, or face. The motion recognition camera 340-2 may obtain a signal corresponding to motion by recognizing the user's gesture, and may provide a display corresponding to the signal to the at least one display 350. A processor may identify a signal corresponding to the operation and may perform a preset function based on the identification. In an embodiment, the motion recognition camera 340-2 may be disposed on the first rim 301 and/or the second rim 302.

According to an embodiment, the camera 340 included in the wearable device 300 is not limited to the above-described eye tracking camera 340-1 and the motion recognition camera 340-2. For example, the wearable device 300 may identify an external object included in the FoV by using a photographing camera 340-3 disposed toward the user's FoV. The wearable device 300 identifying the external object may be performed based on a sensor for identifying a distance between the wearable device 300 and the external object, such as a depth sensor and/or a time of flight (ToF) sensor. The camera 340 disposed toward the FoV may support an autofocus function and/or an optical image stabilization (OIS) function. For example, in order to obtain an image including a face of the user wearing the wearable device 300, the wearable device 300 may include the camera 340 (e.g., a face tracking (FT) camera) disposed toward the face.

Although not illustrated, the wearable device 300 according to an embodiment may further include a light source (e.g., LED) that emits light toward a subject (e.g., user's eyes, face, and/or an external object in the FoV) photographed by using the camera 340. The light source may include an LED having an infrared wavelength. The light source may be disposed on at least one of the frame, and the hinge units 306 and 307.

According to an embodiment, the battery module 370 may supply power to electronic components of the wearable device 300. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

In an embodiment, the antenna module 375 may transmit the signal or power to the outside of the wearable device 300 or may receive the signal or power from the outside. The antenna module 375 may be electrically and/or operably connected to communication circuitry (e.g., the communication circuitry 240 of FIG. 2) in the wearable device 300. In an embodiment, the antenna module 375 may be disposed in the first temple 304 and/or the second temple 305. For example, the antenna module 375 may be disposed close to one surface of the first temple 304 and/or the second temple 305.

The speakers 392-1 and 392-2 may output a sound signal to the outside of the wearable device 300. A sound output module may be referred to as a speaker. In an embodiment, the speakers 392-1 and 392-2 may be disposed in the first temple 304 and/or the second temple 305 in order to be disposed adjacent to the ear of the user wearing the wearable device 300. For example, the wearable device 300 may include a second speaker 392-2 disposed adjacent to the user's left ear by being disposed in the first temple 304, and a first speaker 392-1 disposed adjacent to the user's right ear by being disposed in the second temple 305.

The light emitting module (not illustrated) may include at least one light emitting element. The light emitting module may emit light of a color corresponding to a specific state or may emit light through an operation corresponding to the specific state in order to visually provide information on a specific state of the wearable device 300 to the user. For example, when the wearable device 300 requires charging, it may emit repeatedly red light at a designated time. In an embodiment, the light emitting module may be disposed on the first rim 301 and/or the second rim 302.

Referring to FIG. 3B, according to an embodiment, the wearable device 300 may include the printed circuit board (PCB) 390. The PCB 390 may be included in at least one of the first temple 304 or the second temple 305. The PCB 390 may include an interposer disposed between at least two sub PCBs. On the PCB 390, one or more hardware (e.g., hardware illustrated by blocks described above with reference to FIG. 2) included in the wearable device 300 may be disposed. The wearable device 300 may include a flexible PCB (FPCB) for interconnecting the hardware.

According to an embodiment, the wearable device 300 may include at least one of a gyro sensor, a gravity sensor, and/or an acceleration sensor for detecting the posture of the wearable device 300 and/or the posture of a body part (e.g., a head) of the user wearing the wearable device 300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 300 may identify the user's motion and/or gesture performed to execute or stop a specific function of the wearable device 300 based on the IMU.

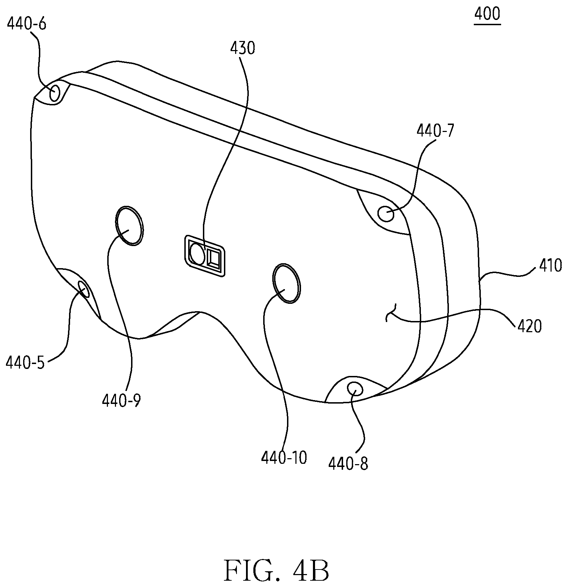

FIGS. 4A to 4B illustrate an example of an exterior of a wearable device 400 according to an embodiment. The wearable device 400 of FIGS. 4A to 4B may include the wearable device 101 of FIGS. 1 to 2. According to an embodiment, an example of an exterior of a first surface 410 of a housing of the wearable device 400 is shown in FIG. 4A, and an example of an exterior of a second surface 420 opposite to the first surface 410 may be shown in FIG. 4B.

Referring to FIG. 4A, according to an embodiment, the first surface 410 of the wearable device 400 may have an attachable shape on the user's body part (e.g., the user's face). Although not illustrated, the wearable device 400 may further include a strap for being fixed on the user's body part, and/or one or more temples (e.g., the first temple 304 and/or the second temple 305 of FIGS. 3A to 3B). A first display 350-1 for outputting an image to the left eye among the user's two eyes and a second display 350-2 for outputting an image to the right eye among the user's two eyes may be disposed on the first surface 410. The wearable device 400 may further include rubber or silicon packing, which are formed on the first surface 410, for preventing interference by light (e.g., ambient light) different from the light emitted from the first display 350-1 and the second display 350-2.

According to an embodiment, the wearable device 400 may include cameras 440-1 and 440-2 for photographing and/or tracking two eyes of the user adjacent to each of the first display 350-1 and the second display 350-2. The cameras 440-1 and 440-2 may be referred to as the ET camera. According to an embodiment, the wearable device 400 may include cameras 440-3 and 440-4 for photographing and/or recognizing the user's face. The cameras 440-3 and 440-4 may be referred to as a FT camera.

Referring to FIG. 4B, a camera (e.g., cameras 440-5, 440-6, 440-8, 440-8, 440-9, and 440-10), and/or a sensor (e.g., the depth sensor 430) for obtaining information associated with the external environment of the wearable device 400 may be disposed on the second surface 420 opposite to the first surface 410 of FIG. 4A. For example, the cameras 440-5, 440-6, 440-7, 440-8, 440-9, and 440-10 may be disposed on the second surface 420 in order to recognize an external object distinct from the wearable device 400. For example, by using cameras 440-9 and 440-10, the wearable device 400 may obtain an image and/or video to be transmitted to each of the user's two eyes. The camera 440-9 may be disposed on the second surface 420 of the wearable device 400 to obtain a frame to be displayed through the second display 350-2 corresponding to the right eye among the two eyes. The camera 440-10 may be disposed on the second surface 420 of the wearable device 400 to obtain a frame to be displayed through the first display 350-1 corresponding to the left eye among the two eyes.

According to an embodiment, the wearable device 400 may include the depth sensor 430 disposed on the second surface 420 in order to identify a distance between the wearable device 400 and the external object. By using the depth sensor 430, the wearable device 400 may obtain spatial information (e.g., a depth map) about at least a portion of the FoV of the user wearing the wearable device 400.

Although not illustrated, a microphone for obtaining sound outputted from the external object may be disposed on the second surface 420 of the wearable device 400. The number of microphones may be one or more according to embodiments.

As described above, according to an embodiment, the wearable device 400 may have the form factor for being worn on a head of a user. The wearable device 400 may provide a user experience based on an augmented reality and/or a mixed reality in a state worn on the head. The wearable device 400 may identify an external electronic device (e.g., the external electronic device 120 of FIG. 1) included in thevideos in the state of outputting each of the videos obtained from the cameras 440-9 and 440-10 through the first display 350-1 and the second display 350-2. The wearable device 400 may compare a portion adjacent to the external electronic device and the direction of the gaze on the first display 350-1 and/or the second display 350-2 based on the direction of the gaze tracked by the cameras 440-3 and 440-4. In response to identifying the direction of the gaze included in the portion, the wearable device 400 may display a visual object and/or a screen to control the external electronic device.

Hereinafter, an example of an operation performed by the wearable device 101 according to an embodiment will be described with reference to FIG. 5.

FIG. 5 illustrates an example of a flowchart with respect to a wearable device according to an embodiment. The wearable device 101 of FIGS. 1 to 2 may include the wearable device of FIG. 5. The operation of the wearable device described with reference to FIG. 5 may be performed by the wearable device 101 and/or the processor 210-1 of FIG. 2. For example, the wearable device may perform at least one of the operations of FIG. 5 based on execution of the external electronic device controller 275 of FIG. 2.

Referring to FIG. 5, in an operation 510, a wearable device according to an embodiment may establish a communication link with an external electronic device (e.g., the external electronic device 120 of FIGS. 1 to 2), by using communication circuitry (e.g., the communication circuitry 240-1 of FIG. 2). The communication link may include pairing between the wearable device and the external electronic device. The communication link may be established based on peer-to-peer (P2P), such as Bluetooth, Bluetooth low energy (BLE), near field communication (NFC), and/or WiFi direct.

Referring to FIG. 5, in an operation 520, according to an embodiment, the wearable device may obtain information with respect to a gaze toward a portion of a display (e.g., the display 220-1 of FIG. 2). The wearable device may obtain an image and/or a video including a pupil of a user wearing the wearable device, by using a camera (e.g., the camera 225 of FIG. 2). In the image and/or the video, the wearable device may obtain the information with respect to the gaze, by using a position where the pupil is captured. The information may arrange the position in a time domain.

Referring to FIG. 5, in an operation 530, according to an embodiment, the wearable device may determine whether a gaze adjacent to the external electronic device is identified. For example, before identifying the gaze adjacent to the external electronic device (530-NO), the wearable device may maintain to obtain the information of the operation 520. In an embodiment, in a state in which the gaze adjacent to the external electronic device is identified (530-YES), the wearable device may display a screen to control the external electronic device, by performing an operation 540. The screen may include at least one visual object to execute at least one function which is selected among a plurality of functions supported by the external electronic device, based on a position where the gaze is identified and a direction where the external electronic device is viewable.

Referring to FIG. 5, in an operation 550, according to an embodiment, the wearable device may display the visual object on the screen based on the position of the gaze with respect to the external electronic device. The wearable device may display the at least one visual object selected by the position in the screen of the operation 540.

Referring to FIG. 5, in an operation 560, according to an embodiment, the wearable device may transmit, to the external electronic device, in response to identifying an input with respect to the visual object, a signal to control a function associated with the visual object. The input may be identified by a motion staring at the visual object greater than a preset period, based on execution of the gaze tracker 271 of FIG. 2. The wearable device may transmit the signal to the external electronic device through the communication circuitry. The wearable device may identify the input through the screen and/or the visual object displayed by the operations 540 and 550. Based on the signal transmitted from the wearable device, the external electronic device may execute the function associated with the visual object displayed by the wearable device. In case that the function is executed, the external electronic device may display a result executing the function on the display (e.g., the display 220-2 of FIG. 2) of the external electronic device.

As described above, according to an embodiment, the wearable device may display the screen to control the external electronic device and/or the visual object in the screen based on the gaze adjacent to the external electronic device. In response to the input received through the screen and/or the visual object, the wearable device may transmit the signal to control the external electronic device.

In order to perform the operations 520 and 530 of FIG. 5, according to an embodiment, the wearable device may identify directions of different body parts of the user wearing the wearable device. Hereinafter, an operation of identifying the direction of the body part of the user by the wearable device according to an embodiment will be described with reference to FIG. 6.

FIG. 6 illustrates an example of an operation in which a wearable device 101 identifies a direction of a body part of a user 110 according to an embodiment. The wearable device 101 of FIGS. 1 to 2 may include the wearable device 101 of FIG. 6. The operation of the wearable device 101 described with reference to FIG. 6 may be performed by the wearable device 101 and/or the processor 210 of FIG. 2. According to an embodiment, the wearable device 101 may identify a motion of the user 110 wearing the wearable device 101, by using a sensor (e.g., the sensor 230 of FIG. 2) and/or a camera (e.g., the camera 225 of FIG. 2).

According to an embodiment, the wearable device 101 may identify a direction in which the wearable device 101 and/or the user 110 moves based on a geographical position of the wearable device 101 identified through the sensor. The wearable device 101 may identify a direction H in which a head of the user 110 wearing the wearable device 101 faces based on data of an IMU. In an embodiment, the direction H in which the head of the user 110 faces mean a direction in which a face of the user 110 faces. In a state of being worn by the user 110, the wearable device 101 may identify a direction G of the gaze, by using the camera (or an image sensor) disposed to face an eye of the user 110. In an embodiment, the direction G of the gaze may mean a direction in which a pupil included in the eye faces. The wearable device 101 may identify a hand 610 from an image and/or a video of another camera (or the image sensor) having a direction different from the camera disposed toward the eye. The wearable device 101 may identify a direction F of at least one finger included in the hand based on a posture of the hand 610. Directions H, G, and F may be the directions of the body parts of the user 110 identified, by using the sensor and/or the camera of the wearable device 101. For example, the wearable device 101 may obtain information indicating the direction (e.g., at least one of the directions H, G, and F) of the body part, by using the sensor.

According to an embodiment, the wearable device 101 may selectively track one of the direction H of the head of the user or the direction G of the gaze to identify the direction in which the user 110 stares. For example, based on a difference in an angle between the direction H of the head and the direction G of the gaze, the wearable device 101 may track any one of the two directions H, and G. For example, based on a degree to which a resource of the wearable device 101 is occupied, the wearable device 101 may select any one of the two directions H and G.

According to an embodiment, the wearable device 101 may identify a portion (e.g., a point of interest (POI) of the user 110) 630 focused by the user 110 in a field-of-view (FoV) of the user 110 based on the information indicating the direction of the body part. The portion 630 may be formed on a surface of an external object (e.g., the external electronic device 120) disposed in the direction in which the user 110 stares in an external space recognized by the wearable device 101. A size (e.g., a diameter) of the portion 630 may be proportional to a distance between the wearable device 101 and the external object. For example, as the distance between the wearable device 101 and the external electronic device 120 increases, the wearable device 101 identifying the direction G of the gaze toward the external electronic device 120 may increase the size of the portion 630 formed on the external electronic device 120. According to an embodiment, the wearable device 101 may display a visual object representing the portion 630 on the display. The wearable device 101 may display the visual object having a preset color and/or preset transparency in the portion 630. The visual object displayed in the portion 630 may be referred to as a pointer.

As described above, according to an embodiment, the wearable device 101 may identify the direction G of the gaze moving in a display area. The wearable device 101 may display the portion 630 toward which the direction G of the gaze faces on the display. According to an embodiment, the wearable device 101 may display a screen to control the external electronic device 120 based on identifying the portion 630 adjacent to the external electronic device 120 in the display area. In response to an input performed on the screen, the wearable device 101 may transmit, to the external electronic device 120, a signal to control the external electronic device 120.

Hereinafter, an example of an operation in which the wearable device 101 according to an embodiment communicates with the external electronic device 120 will be described with reference to FIGS. 7A to 7B.

FIGS. 7A to 7B illustrate an example of an operation in which a wearable device 101 is connected with an external electronic device 120 according to an embodiment. The wearable device 101 of FIGS. 1 to 2 may include the wearable device 101 of FIGS. 7A to 7B. The operation of the wearable device 101 described above with reference to FIGS. 7A to 7B may be performed by the wearable device 101 and/or the processor 210 of FIG. 2.

Referring to FIG. 7A, according to an embodiment, states 701 and 702 of the wearable device 101 connected to an external electronic device 120 are illustrated. In the state 701, the wearable device 101 may display a visual object 710 to connect with the external electronic device 120 on a display. The wearable device 101 may display the visual object 710 having a shape of an image and/or an icon. In response to an input indicating selection of the visual object 710, the wearable device 101 may identify the external electronic device 120 adjacent to the wearable device 101, by transmitting a wireless signal (e.g., an advertising signal) based on Bluetooth low energy (BLE). According to an embodiment, the wearable device 101 may display a pop-up window 720 including a list of the external electronic device 120 identified by the wearable device 101 based on identifying the external electronic device 120. In the visual object having the shape of the pop-up window 720, the wearable device 101 may display an icon 722 corresponding to the external electronic device 120. Together with the icon 722, the wearable device 101 may display text (e.g., "phone of A") representing the external electronic device 120.

According to an embodiment, the wearable device 101 may switch to the state 702 in response to an input indicating selection of the icon 722 in the pop-up window 720. The input may be received based on a direction G of a gaze and/or a direction F of a finger of FIG. 7A. In the state 702, the wearable device 101 may establish a communication link with the external electronic device 120. The establishing the communication link may include performing pairing between the wearable device 101 and the external electronic device 120. The establishing the communication link may include an operation in which the wearable device 101 and the external electronic device 120 exchange an address (e.g., an IP address and/or a media access control (MAC) address) in a network based on account information commonly logged in the wearable device 101 and the external electronic device 120. In the state 702, the wearable device 101 may transmit, to the external electronic device 120, a signal to display a marker 732 such as a quick-response (QR) code. In response to the signal, the external electronic device 120 may display a pop-up window 730 including the marker 732 on a display 220-2 of the external electronic device 120. The external electronic device 120 may display the marker 732 having the shape of the QR code in the pop-up window 730. The marker 732 may have a size indicated by the signal transmitted from the wearable device 101. The marker 732 may be displayed along a direction (e.g., a vertical direction) of the display 220-2 of the external electronic device 120.

According to an embodiment, the wearable device 101 may identify at least one of the size, the position, and/or the direction in which the display 220-2 of the external electronic device 120 is viewable based on the size and/or the direction of the marker 730 viewable through the display. The wearable device 101 may display a screen to control the external electronic device 120, by using the size and/or the position of the display 220-2 of the external electronic device 120.

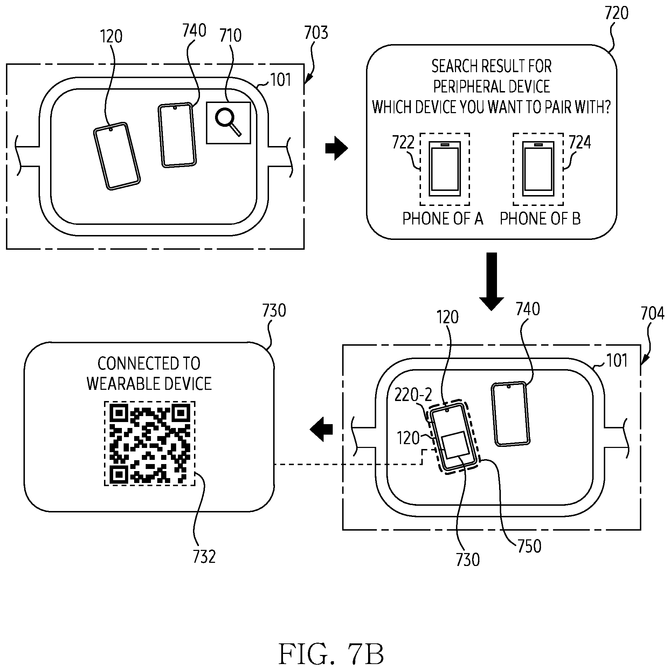

Referring to FIG. 7B, different states 703 and 704 of the wearable device 101 adjacent to a plurality of external electronic devices 120 and 740 according to an embodiment are illustrated. In the state 703, the wearable device 101 may identify the plurality of external electronic devices 120 and 740 adjacent to the wearable device 101 based on the input indicating the selection of the visual object 710. The wearable device 101 may display icons 722 and 724 representing each of the plurality of external electronic devices 120 and 740 in the pop-up window 720. The wearable device 101 may display texts (e.g., "phone of A" displayed with the icon 722 and "phone of B" displayed with the icon 724) assigned to each of the plurality of external electronic devices 120 and 740, together with the icons 722 and 724. The wearable device 101 may identify the input indicating selection of any one of the external electronic devices 120 and 740 in the pop-up window 720.

For example, in response to a gesture of selecting the icon 722 corresponding to the external electronic device 120, the wearable device 101 may enter the state 704. In the state 704, the wearable device 101 may request the external electronic device 120 to display the pop-up window 730 including the marker 732. The wearable device 101 identifying the external electronic device 120 on which the pop-up window 730 is displayed may identify the direction and/or the size of the marker 732 in the pop-up window 730 viewable through the display of the wearable device 101, by using a camera (e.g., the camera 225 of FIG. 2). Based on the direction and/or the size of the marker 732, the wearable device 101 may identify a position, a size and/or a direction of the external electronic device 120 and/or the display 220-2 viewable through the display.

As described above, according to an embodiment, the wearable device 101 may identify the size and/or the direction of the external electronic device 120 viewable through the display (e.g., the display 220-1 of FIG. 2), by using the marker 732. The wearable device 101 may transmit, to the external electronic device 120, the signal to display the marker 732, by using the communication link. The wearable device 101 that transmitted the signal may determine that the external electronic device 120 viewable through the display has received the signal, by searching for the external electronic device 120 on which the marker 732 is displayed on the display. In a state of being connected to the external electronic device 120, the wearable device 101 may display a screen to control the external electronic device 120 based on identifying a gaze adjacent to the external electronic device 120. Hereinafter, an example of an operation in which the wearable device 101 displays the screen according to an embodiment will be described with reference to FIGS. 8A to 8D.

FIGS. 8A to 8E illustrate an example of an operation performed by a wearable device 101 based on identifying a gaze adjacent to an external electronic device 120 according to an embodiment. The wearable device 101 of FIGS. 1 to 2 may include the wearable device 101 of FIGS. 8A to 8E. The operation of the wearable device 101 described with reference to FIGS. 8A to 8E may be performed by the wearable device 101 and/or the processor 210 of FIG. 2. States 801, 802, 803, 804, and 805 of FIGS. 8A to 8D may be a state after a communication link between the wearable device 101 and the external electronic device 120 described above with reference to FIGS. 7A to 7B is established.

In the state 801 of FIG. 8A, according to an embodiment, the wearable device 101 may identify a direction G2 of a gaze toward a portion 140 where the external electronic device 120 is viewable in a display area 130. For example, in case that a user 110 stares at the external electronic device 120, the wearable device 101 may identify the direction G2 of the gaze toward the portion 140. In the state 801 in which the direction G2 of the gaze toward the portion 140 where the external electronic device 120 is viewable is identified, the wearable device 101 may display visual objects 821, 822, and 823 to guide control of the external electronic device 120 in the display area 130. The visual objects 821, 822, and 823 exemplarily illustrated in FIG. 8A may be disposed in an area extending from the edges of the external electronic device 120 viewable through a display and may have a shape of an outline of a screen to be displayed through the area. The visual objects 821, 822, and 823 may have transparency that increases as they move away from the external electronic device 120 viewable through the display based on a visual effect such as a gradation. The wearable device 101 may display the visual objects 821, 822, and 823 based on a size and/or the direction of the portion 140 where the external electronic device 120 is viewable, identified by the marker 732 of FIGS. 7A to 7B.

In the state 801 of FIG. 8A, according to an embodiment, the wearable device 101 may switch a state of the external electronic device 120, by using the communication link established with the external electronic device 120. For example, based on identifying the external electronic device 120 in a sleep state, the wearable device 101 may transmit a signal to the external electronic device 120 to switch the state of the external electronic device 120 from the sleep state to an active state in response to the direction G2 of the gaze toward the portion 140. The external electronic device 120 receiving the signal may display a lock screen and/or a launcher screen on the display (e.g., the display 220-2 of FIG. 2) of the external electronic device 120.

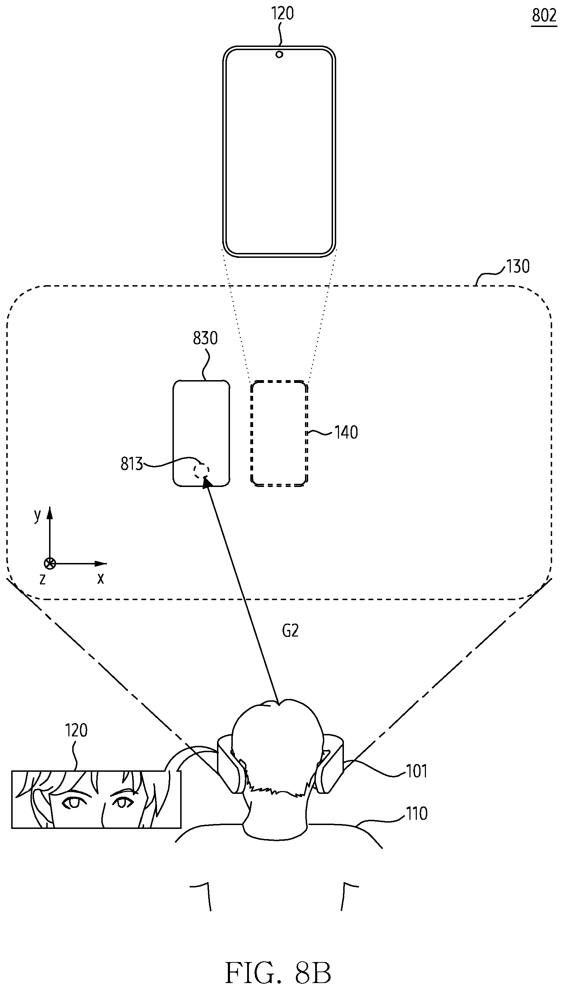

In the state 802 of FIG. 8B, the wearable device 101 according to an embodiment may identify the direction G2 of the gaze adjacent to the portion 140 of the display area 130 where the external electronic device 120 is viewable. For example, the wearable device 101 may identify the direction G2 of the gaze included in an area 830, which is formed adjacent to the portion 140 where the external electronic device 120 is viewable and has the size of the external electronic device 120. For example, the area 830 may be parallel to an edge of the portion 140 where the external electronic device 120 is viewable, and may have the shape of the display of the external electronic device 120. The area 830 may be adjacent to the portion 140 in a -x axis direction in the display area 130. The wearable device 101 may display a pointer in a portion 813 in the display area 130 toward which the direction G2 of the gaze faces.

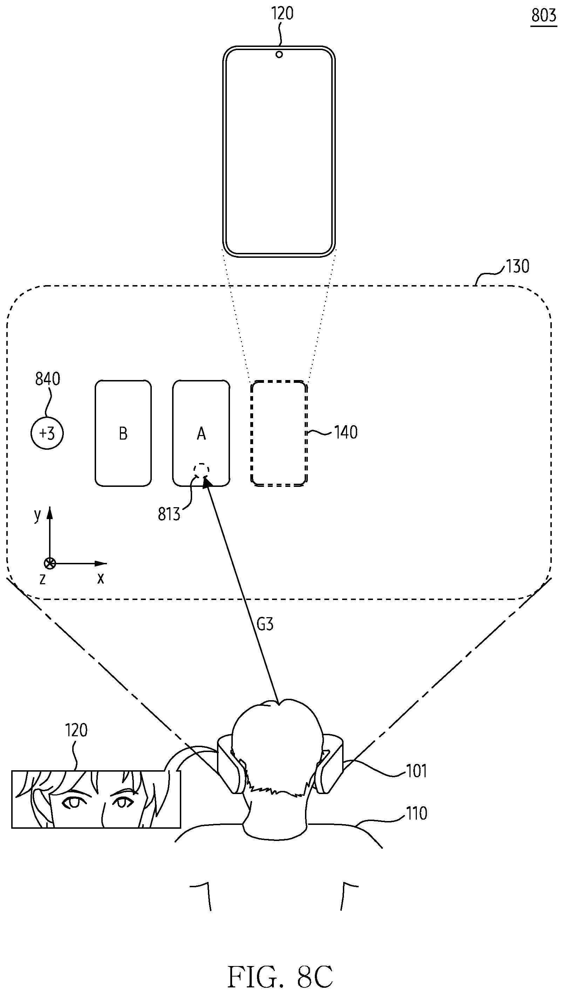

In an embodiment, the portion 140 where the external electronic device 120 is viewable and the area 830 adjacent to the -x axis direction may be mapped to a function to switch an application executed by the external electronic device 120. Based on identifying the direction G2 of the gaze toward the area 830 in the display area 130, the wearable device 101 may switch from the state 802 to a state 803 displaying a screen to control the external electronic device 120. In the state 803 of FIG. 8C, the wearable device 101 may display one or more screens (e.g., screens A and B) adjacent to the portion 140 where the external electronic device 120 is viewable. The screens A and B displayed adjacent to the portion 140 by the wearable device 101 may be screens displayed through the display of the external electronic device 120. Based on an order executed by the external electronic device 120, the wearable device 101 may sequentially display the screens A and B from the portion 140 where the external electronic device 120 is viewable. The screens A and B may be included in a list of a plurality of applications executed by the external electronic device 120.

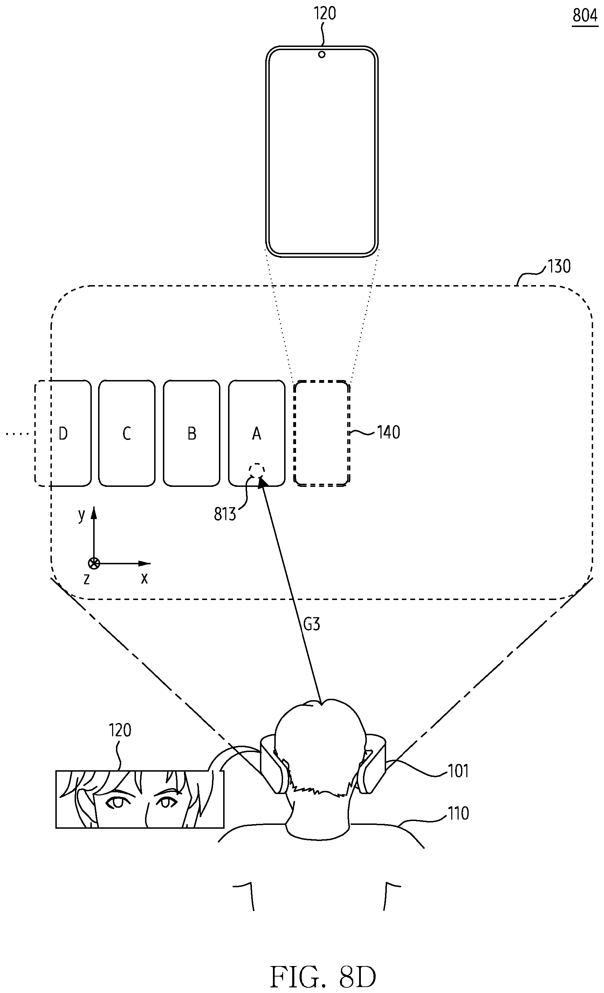

Referring to FIG. 8C, in the state 803, the wearable device 101 may display a visual object 840 to extend the list of the applications including the screens A and B in a direction (e.g., the -x axis direction) in the display area 130. The visual object 840 may include a number (e.g., "+3") indicating the number of other screens to be additionally displayed with the screens A and B. The wearable device 101 may switch from the state 803 of FIG. 8C to a state 804 of FIG. 8D based on identifying a gaze and/or a fingertip toward the visual object 840. Referring to FIG. 8D, in the state 804, the wearable device 101 may sequentially display the screens A, B, C, and D along the -x axis direction from the portion 140 where the external electronic device 120 is viewable. Each of the screens A, B, C, and D displayed by the wearable device 101 may be a screen shot of the application executed by the external electronic device 120. Based on the screens A, B, C, and D displayed side by side, the wearable device 101 may provide the user 110 with the list of the applications executed by the external electronic device 120. In the states 803 and 804 of FIGS. 8C to 8D, the wearable device 101 may request the external electronic device 120 to execute the application corresponding to a screen selected by a input in response to the input indicating selection of any one of the screens A, B, C, and D.

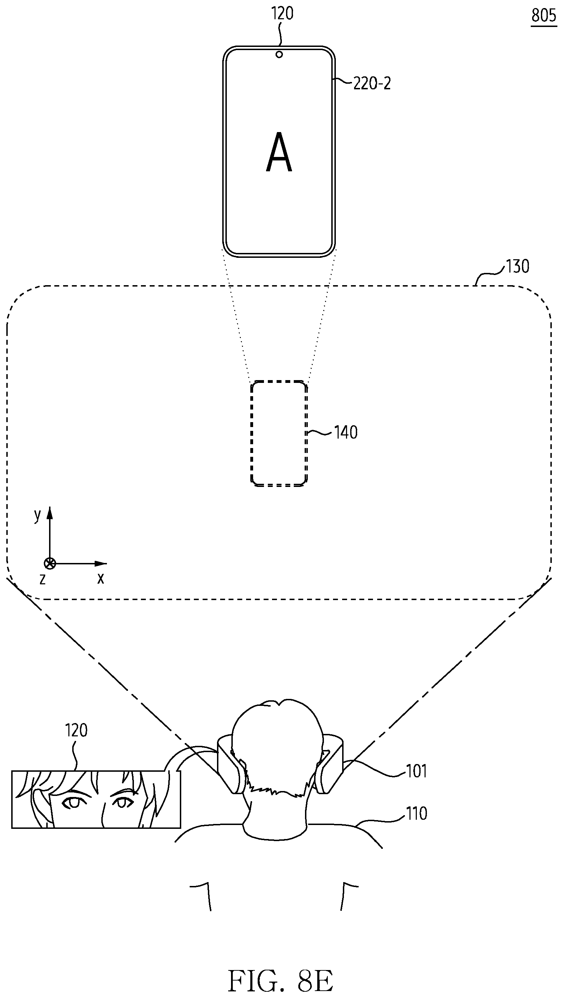

For example, the wearable device 101 identifying a direction G3 of the gaze toward the screen A may switch to a state 805 of FIG. 8E. The wearable device 101 may transmit a signal to execute the application corresponding to the screen A to the external electronic device 120 based on identifying the direction G3 of the gaze toward the screen A, longer than a preset period (e.g., several seconds). In the state 805, the wearable device 101 may stop displaying the list (e.g., the screens A, B, C, and D) of the applications adjacent to the portion 140. The signal may include an identifier (e.g., a package name) of the screen A and/or the application. The external electronic device 120 receiving the signal may display the screen A provided from the application on the display 220-2. The external electronic device 120 may display the lock screen for authentication of the user 110 based on the signal, or may bypass the lock screen and display the screen A. For example, the signal may include information (e.g., information to authenticate the user 110) to bypass the lock screen.

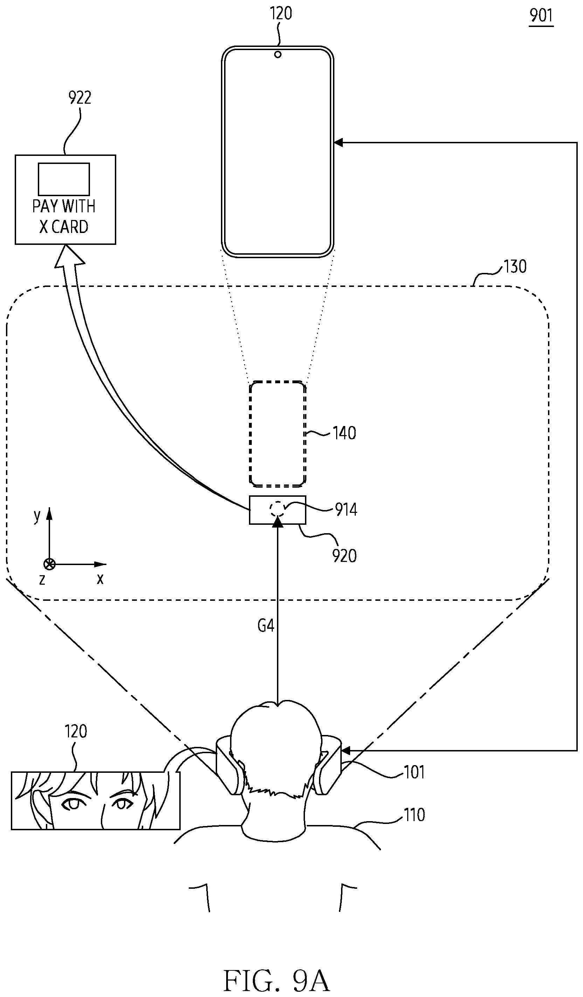

As described above, according to an embodiment, the wearable device 101 may display the list of the applications executed by the external electronic device 120 based on the direction G3 of the gaze toward the area 830 adjacent to the portion 140 where the external electronic device 120 is viewable. The list may include screen shots with respect to the screens A, B, C, and D executed by the external electronic device 120. The wearable device 101 may transmit a signal to execute an application corresponding to a specific screen selected from the list to the external electronic device 120. The area 830 adjacent to the portion 140 along the -x axis direction where the external electronic device 120 is viewable may correspond to a function of displaying the list of the applications. Another direction adjacent to the portion 140 (e.g., a -y-axis direction, a +y-axis direction, and/or a +x-axis direction) may be matched to another function supported through the external electronic device 120. Hereinafter, an example of an operation performed by the wearable device 101 will be described based on a gaze toward a portion adjacent to the external electronic device 120 in a different direction, with reference to FIGS. 9A to 9C.

FIGS. 9A to 9C illustrate an example of an operation performed by a wearable device based on identifying a gaze adjacent to an external electronic device according to an embodiment. The wearable device 101 of FIGS. 1 to 2 may include a wearable device 101 of FIGS. 9A to 9C. The operation of the wearable device 101 described with reference to FIGS. 9A to 9C may be performed by the wearable device 101 and/or the processor 210 of FIG. 2. States 901, 902, and 903 of FIGS. 9A to 9C may be a state after a communication link between the wearable device 101 and the external electronic device 120 described above with reference to FIGS. 7A to 7B is established.

In the state 901 of FIG. 9A, according to an embodiment, the wearable device 101 may identify a direction G4 of the gaze adjacent to a portion 140 where the external electronic device 120 is viewable in a display area 130. The wearable device 101 may identify the direction G4 of the gaze toward an area 920 adjacent to the portion 140 in a -y-axis direction. For example, the wearable device 101 may display a pointer in a portion 914 of the display area 130 matched to the direction G4 of the gaze. The wearable device 101 identifying the direction G4 of the gaze toward the area 920, by being greater than a preset period may display a pop-up window 922 to execute a function corresponding to the area 920 among functions of the external electronic device 120. In the state 901 in which a function for payment is matched to the area 920, the wearable device 101 may display the pop-up window 922 to execute the function. The wearable device 101 may display the pop-up window 922 on the area 920. However, the embodiment is not limited thereto.

According to an embodiment, the wearable device 101 may display a visual object guiding that the function for the payment is executed in the pop-up window 922. For example, the wearable device 101 may display an image representing a credit card registered in the external electronic device 120 in the pop-up window 922. The wearable device 101 may display text (e.g., "pay with an X card") guiding that the function is executed in the pop-up window 922. In response to an input associated with the pop-up window 922, the wearable device 101 may transmit a signal to execute the function for the payment to the external electronic device 120. In response to the signal, the external electronic device 120 may execute the payment.

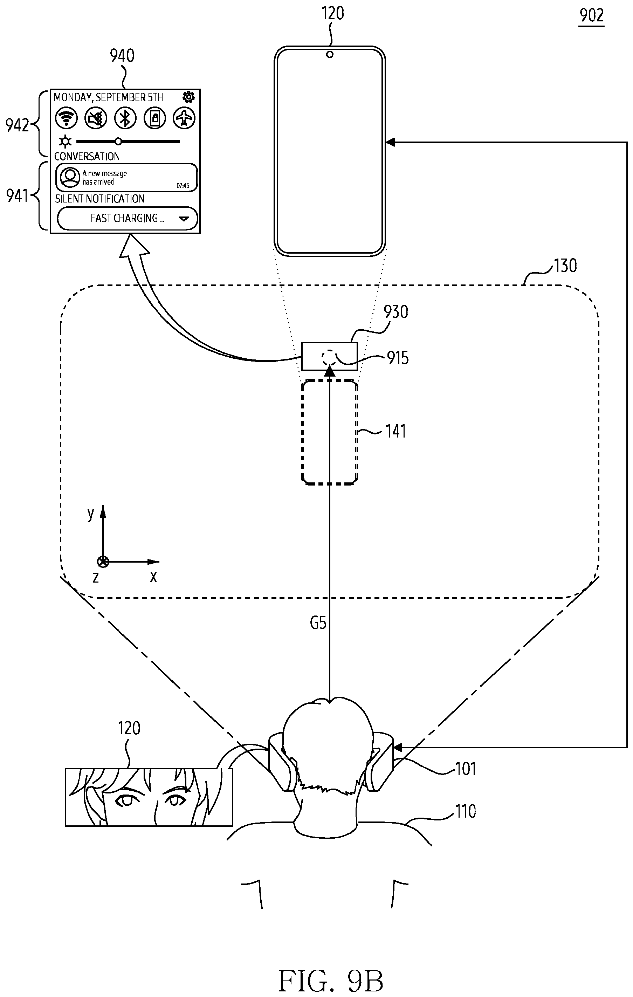

In the state 902 of FIG. 9B, according to an embodiment, the wearable device 101 may identify a direction G5 of the gaze adjacent to a portion 141 where the external electronic device 120 is viewable in the display area 130. The wearable device 101 may identify the direction G5 of the gaze toward an area 930 adj acent to the portion 141 and a +y-axis direction. For example, the wearable device 101 may display a pointer in a portion 915 of the display area 130 matched to the direction G5 of the gaze. The wearable device 101 identifying the direction G5 of the gaze toward the area 930, by being greater than the preset period may display a pop-up window 940 to execute a function corresponding to the area 930 among functions of the external electronic device 120. The pop-up window 940 may have a shape of a notification center 941 and a control panel 942 provided through the display of the external electronic device 120.

In the state 902 of FIG. 9B, according to an embodiment, the wearable device 101 may execute the function to adjust the state of the external electronic device 120 based on the control panel 942 in the pop-up window 940. For example, based on an input associated with an icon included in the control panel 942, the wearable device 101 may transmit a signal to adjust the state mapped to the icon to the external electronic device 120. The wearable device 101 may display one or more notification messages generated from the external electronic device 120 through the notification center 941 in the pop-up window 940. For example, based on an input associated with the notification message in the notification center 941, the wearable device 101 may transmit a signal to display the notification message selected by the input to the external electronic device 120.

According to an embodiment, the wearable device 101 may change a size of the pop-up window 940 based on the size of the external electronic device 120 viewable through the display area 130. In the state 902 of FIG. 9B, the wearable device 101 may display the pop-up window 940 based on the size of the pointer displayed in the direction G5 of the gaze. In the state 902 in which the external electronic device 120 is spaced apart from the wearable device 101 by exceeding a preset distance, or the size of the portion 141 where the external electronic device 120 is viewable is less than the preset size, the wearable device 101 may display the entire pop-up window 940 on the display area 130.

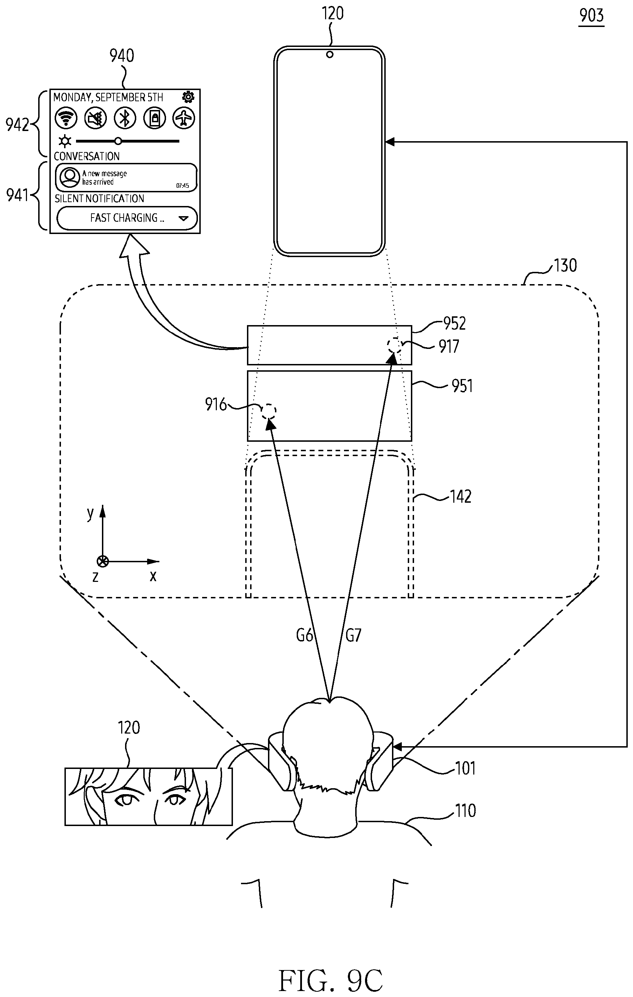

Referring to FIG. 9C, in the state 903 in which the external electronic device 120 is spaced apart from the wearable device 101 by less than the preset distance, or the size of a portion 142 where the external electronic device 120 is viewable is greater than the preset size, the wearable device 101 may display at least a portion of the pop-up window 940 in an area formed between the direction of the gaze and the portion 142. The wearable device 101 may selectively display the control panel 942 in the pop-up window 940 based on the portion 142 where the external electronic device 120 is viewable and a direction G6 of the gaze toward an area 951 adjacent to the +y-axis direction. The wearable device 101 may display both the control panel 942 and the notification center 941 in the pop-up window 940 based on a direction G7 of the gaze toward an area 952 farther than the area 951 from the portion 142.

Referring to FIG. 9C, the wearable device 101 selectively displaying the control panel 942 in the pop-up window 940 based on the direction G6 of the gaze may display the control panel 942 through the area 951. The wearable device 101 may display the pointer in a portion 916 of the display area 130 matched to the direction G6 of the gaze. Similarly, the wearable device 101 displaying both the control panel 942 and the notification center 941 in the pop-up window 940 based on the direction G7 of the gaze may display the pop-up window 940 in all areas 951 and 952 extending from the portion 142 where the external electronic device 120 is viewable. The wearable device 101 may display the pointer on a portion 917 of the display area 130 matched to the direction G7 of the gaze.

As described above, according to an embodiment, the wearable device 101 may display a visual object (e.g., pop-up windows 922 and 940) to control the external electronic device 120 based on the direction (e.g., the directions G4, G5, G6, and G7) of the gaze adjacent to the portion (e.g., the portions 140, 141, and 142) of the display where the external electronic device 120 is viewable. The visual object displayed by the wearable device 101 may be a visual object (or a preset screen) selected based on a position of the gaze adjacent to the external electronic device 120 among preset visual objects (or preset screens). The wearable device 101 may display the selected visual object in an area between the external electronic device 120 viewable through the display and the position. In response to an input to the visual object, the wearable device 101 may transmit a signal to execute a function of the external electronic device 120 corresponding to the visual object to the external electronic device 120.

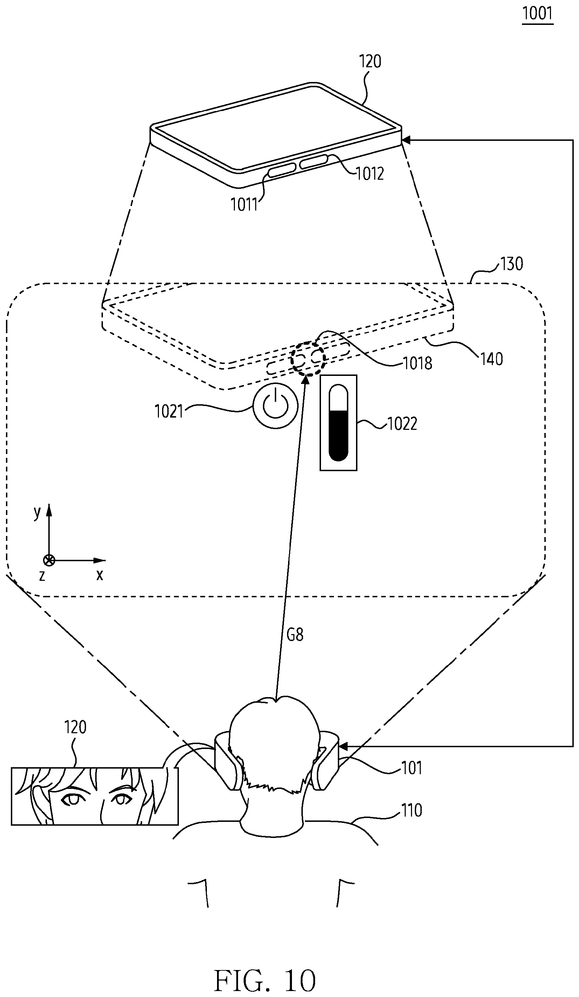

As described above with reference to FIGS. 8A to 8E and 9A to 9C, the wearable device 101 may execute the function of the external electronic device 120, by using the visual object (or the screen) having the shape of the display (e.g., the display 220-2 of FIG. 2) of the external electronic device 120 viewable through the display area 130. An embodiment is not limited thereto, and the wearable device 101 may display a virtual button to remotely control an actual button formed in the external electronic device 120. Hereinafter, according to an embodiment, an example of an operation in which the wearable device 101 displays a visual object to execute a function mapped to the button of the external electronic device 120 will be described with reference to FIG. 10.

FIG. 10 illustrates an example of an operation performed by a wearable device 101 based on identifying a gaze adjacent to an external electronic device 120 according to an embodiment. The wearable device 101 of FIGS. 1 to 2 may include the wearable device 101 of FIG. 10. The operation of the wearable device 101 described with reference to FIG. 10 may be performed by the wearable device 101 and/or the processor 210 of FIG. 2.

In a state 1001 of FIG. 10, according to an embodiment, the wearable device 101 may identify buttons 1011 and 1012 of the external electronic device 120 viewable through a display area 130. In a portion 140 of the display area 130 where the external electronic device 120 is viewable, the wearable device 101 may identify a position where the buttons 1011 and 1012 are viewable. According to an embodiment, the wearable device 101 may identify a direction G8 of a gaze toward the portion of the display area 130 where the buttons 1011 and 1012 are viewable. The wearable device 101 may display a pointer in a portion 1018 toward which the direction G8 of the gaze faces in the display area 130.

In the state 1001 in which the direction G8 of the gaze toward the buttons 1011 and 1012 of the external electronic device 120 is identified, the wearable device 101 may display visual objects 1021 and 1022 adjacent to the portion of the display area 130 where the buttons 1011 and 1012 are viewable. The visual object 1021 may include an icon displayed in the portion of the display area 130 adjacent to the button 1011 and representing a function (e.g., a function of switching the state of the external electronic device 120 between a sleep state and an active state) mapped to the button 1011. The visual object 1022 may include a slider to execute a function (e.g., a function of adjusting a volume of the external electronic device 120) mapped to the button 1012, displayed in the portion of the display area 130 adjacent to the button 1012.

In response to an input associated with any one of the visual objects 1021 and 1022, according to an embodiment, the wearable device 101 may transmit a signal to execute the function of the button among buttons corresponding to the visual object selected by the input among the buttons 1011 and 1012 to the external electronic device 120. For example, the wearable device 101 identifying the gaze that stares at the visual object 1021, by being greater than a preset period may transmit the signal to execute the function mapped to the button 1011 to the external electronic device 120. For example, the wearable device 101 that identifies a gesture (e.g., a drag gesture moving along the direction of the visual object 1022) with respect to the visual object 1022 may transmit a signal, to the external electronic device 120, to adjust a volume corresponding to the button 1012.

As described above, according to an embodiment, the wearable device 101 may display a software button corresponding to the buttons 1011 and 1012 of the external electronic device 120 by using the visual objects 1021 and 1022. By using the software button, the wearable device 101 may execute a function of remotely controlling the external electronic device 120. According to an embodiment, the wearable device 101 may rotate or invert the screen displayed on the display (e.g., the display 220-2 of FIG. 2) of the external electronic device 120 based on a position and/or a direction of the external electronic device 120 viewable through the display area 130.

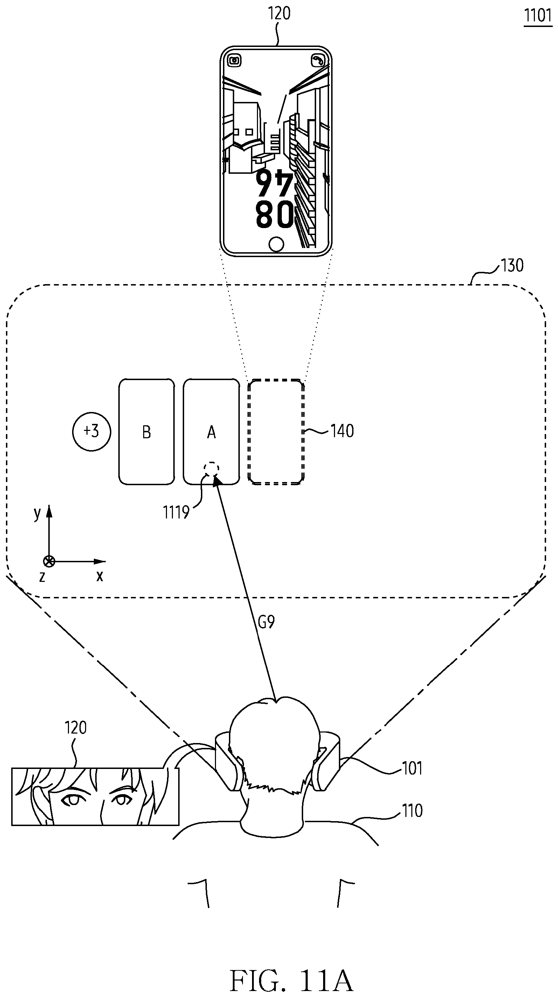

Hereinafter, an example of an operation performed by the wearable device 101 according to an embodiment based on the direction of the external electronic device 120 viewable through the display area 130 will be described with reference to FIGS. 11A to 11B.

FIGS. 11A to 11B illustrate an example of an operation performed by a wearable device 101 based on a direction of an external electronic device 120 viewable through a display according to an embodiment. The wearable device 101 of FIGS. 1 to 2 may include the external electronic device 120 of FIGS. 11A to 11B. The operation of the wearable device 101 described with reference to FIGS. 11A to 11B may be performed by the wearable device 101 and/or the processor 210 of FIG. 2. The states 1101 and 1102 of FIGS. 11A to 11B may be states after the wearable device 101 identifies the external electronic device 120 viewable through a display area 130 based on the marker 732 of FIGS. 7A to 7B.

In the state 1101 of FIG. 11A, according to an embodiment, the wearable device 101 may identify the external electronic device 120 toward a -y-axis direction in a display area 130. A direction of the external electronic device 120 viewable through the display may be identified by the wearable device 101 based on a visual object viewable through a display (e.g., the display 220-2 of FIG. 2) of the external electronic device 120 as the marker 732 of FIGS. 7A to 7B. According to an embodiment, the wearable device 101 may display a list of applications executed by the external electronic device 120 based on identifying a direction G9 of a gaze adjacent to a portion 140 where the external electronic device 120 is viewable. The wearable device 101 may display a pointer in a portion 1119 of the display area 130 toward the direction G9 of the gaze.

In the exemplary state 1101 of FIG. 11A, the wearable device 101 may display screen shots (e.g., screens A and B) of different applications executed in the external electronic device 120 along a -x axis direction from the portion 140 based on the direction G9 of the gaze adjacent to the portion 140 in the -x axis direction in the display area 130. Displaying the list of the applications in the state 1101 of FIG. 11A by the wearable device 101 may be performed similar to the operation of the wearable device 101 in the state 803 of FIG. 8C.

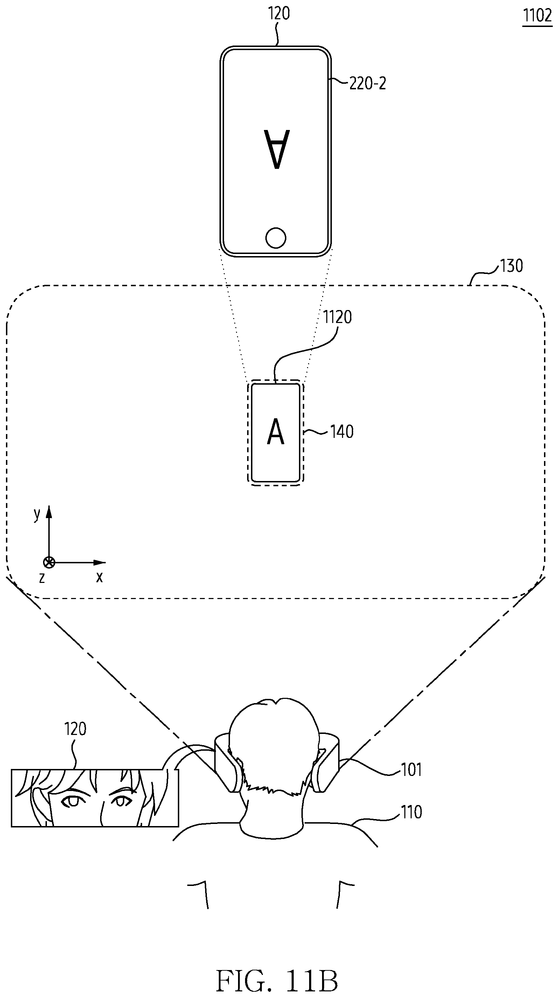

In the state 1101 of FIG. 11A, independently of the external electronic device 120 facing a -y-axis direction, the wearable device 101 may display the screens A and B along a +y-axis direction. The wearable device 101 identifying the gaze toward the screen A, by being greater than a preset period may transmit a signal to execute an application corresponding to the screen A to the external electronic device 120. The state 1102 of FIG. 11B may include an exemplary state after transmitting the signal.

Referring to FIG. 11B, in the state 1102, by executing an application specified by the signal transmitted from the wearable device 101, the external electronic device 120 may display the screen A provided from the application on the display 220-2. In the state 1102 in which the external electronic device 120 is inverted along the -y-axis direction, the screen A may be displayed along the -y-axis direction on the display 220-2. According to an embodiment, in case that the direction of the external electronic device 120 and/or the display 220-2 is different from the preset direction (e.g., the +y-axis direction), the wearable device 101 may rotate and display the screen A displayed on the display 220-2 in the preset direction in the display area 130. The preset direction may be a direction recognized as a top by a user 110 wearing the wearable device 101 such as the +y-axis direction. For example, the wearable device 101 may perform a crop with respect to a portion corresponding to the display 220-2 in an image obtained from a camera (e.g., the camera 225 of FIG. 2). The wearable device 101 may rotate the portion cropped from the image based on the preset direction. In the state 1102 of 11B, the wearable device 101 may display, in the display area 130, a visual object 1120 including the portion of the rotated image. The visual object 1120 may represent the screen A displayed along the preset direction.

As described above, according to an embodiment, the wearable device 101 may rotate or invert the screen A displayed on the display 220-2 of the external electronic device 120 based on the direction of the external electronic device 120 viewable to the user 110. The wearable device 101 may provide a visual effect that the display 220-2 viewable through the display area 130 displays the screen A along a direction different from the direction of the external electronic device 120, by using the visual object 1120.

Although the operation of the wearable device 101 controlling remotely the external electronic device 120, which is a mobile phone, is described, the embodiment is not limited thereto. For example, the wearable device 101 may remotely control another electronic device viewable through the display area 130. Hereinafter, an example of an operation in which the wearable device 101 remotely controls another electronic device such as a smart watch according to an embodiment will be described with reference to FIGS. 12A to 12B.

FIGS. 12A to 12B illustrate an example of an operation performed by a wearable device 101 based on identifying a gaze adjacent to an external electronic device 1210 according to an embodiment. The wearable device 101 of FIGS. 1 to 2 may include the wearable device 101 of FIGS. 12A to 12B. The operation of the wearable device 101 described with reference to FIGS. 12A to 12B may be performed by the wearable device 101 and/or the processor 210 of FIG. 2.

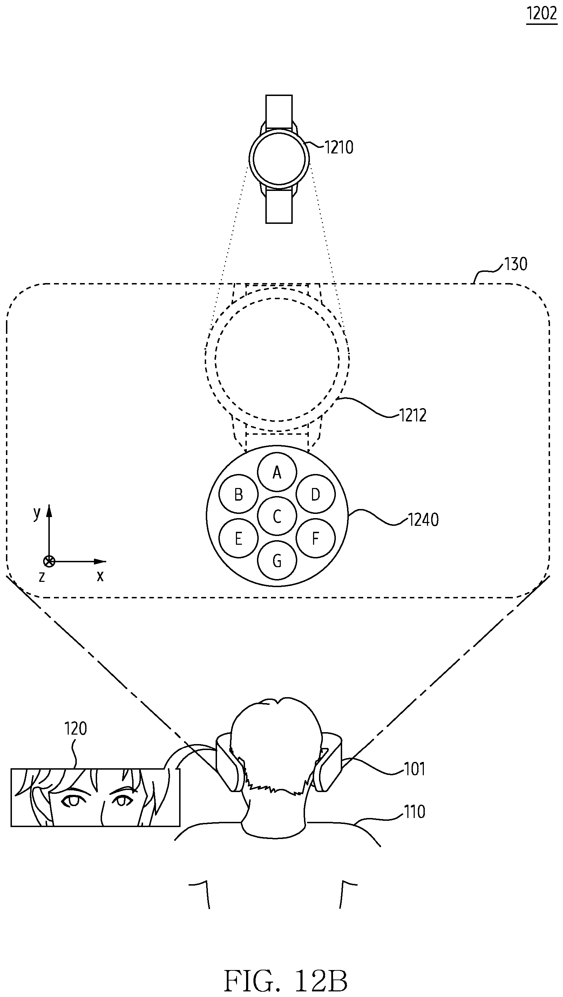

Referring to FIG. 12A, an exemplary state 1201 in which the wearable device 101 establishes a communication link with an external electronic device 1210 in a shape of a smart watch is illustrated. In the state 1201, the wearable device 101 may identify a direction Ga of a gaze toward an area 1230 adjacent to a portion 1212 of the display area 130 where the external electronic device 1210 is viewable. The wearable device 101 may display a pointer in a portion 1220 of the display area 130 corresponding to the direction Ga of the gaze. The direction Ga of the gaze may be identified based on the image 120 including eyes of a user 110. Based on identifying the direction Ga of the gaze toward an area 1230, by being greater than a preset period, the wearable device 101 may switch from the state 1201 of FIG. 12A to a state 1202 of FIG. 12B.

In the state 1202 of FIG. 12B, according to an embodiment, the wearable device 101 may output a screen 1240 in the shape of a display of the external electronic device 1210 through the display area 130. The screen 1240 may be displayed to execute a function of the external electronic device 1210 corresponding to the area 1230 in which the direction Ga of the gaze faces. The wearable device 101 may display icons representing each of applications executed by the external electronic device 1210 on the screen 1240. In response to an input indicating selection of an icon in the screen 1240, the wearable device 101 may transmit a signal to execute the application corresponding to the icon selected by the input to the external electronic device 1210. The external electronic device 1210 receiving the signal may execute an application corresponding to the signal. In the state in which the application is executed, the external electronic device 1210 may display a screen provided from the application.

As described above, according to an embodiment, the wearable device 101 may display the screen 1240 having the shape of the display of the external electronic device 1210, by communicating with the external electronic device 1210 having a form factor distinguished by a mobile phone. Based on the screen 1240, the wearable device 101 may remotely control the external electronic device 1210. For example, the wearable device 101 may support the user 110 wearing the wearable device 101 to control the external electronic device 1210 without directly interacting with the external electronic device 1210.

Hereinafter, an example of information exchanged between the wearable device 101 and the external electronic device 1210 according to an embodiment will be described with reference to FIG. 13.

FIG. 13 illustrates an example of a signal flowchart with respect to a wearable device 101 and an external electronic device 120 according to an embodiment. The wearable device 101 of FIGS. 1 to 2 may include the wearable device 101 of FIG. 13. The operation of the wearable device 101 described with reference to FIG. 13 may be performed by the wearable device 101 and/or the processor 210 of FIG. 2.

Referring to FIG. 13, in an operation 1310, according to an embodiment, a communication link may be established between the wearable device 101 and the external electronic device 120. The wearable device 101 may establish the communication link between the wearable device 101 and the external electronic device 120 based on pairing. By using the communication link, the wearable device 101 may identify a position and/or a distance of the external electronic device 120 adjacent to the wearable device 101.

Referring to FIG. 13, in an operation 1320, according to an embodiment, the wearable device 101 may display a screen associated with the external electronic device 120 based on the gaze adjacent to the external electronic device 120. The wearable device 101 may display a screen matched to the gaze toward a portion adjacent to the external electronic device 120, by performing at least one of the operations 520, 530, and 540 of FIG. 5. The screen of the operation 1320 may include the screen 150 of FIG. 1, the screens A, B, C, and D of FIGS. 8B to 8C, the pop-up window 922 of FIG. 9A, the pop-up window 940 of FIGS. 9B to 9C, the visual objects 1021 and 1022 of FIG. 10, the screens A and B of FIG. 11A, and/or the screen 1240 of FIG. 12B. The screen displayed based on the operation 1320 may be a screen selected based on the position of the gaze with respect to the external electronic device 120 among preset screens associated with the external electronic device 120.

Referring to FIG. 13, in an operation 1330, according to an embodiment, the wearable device 101 may transmit a signal 1332 to control the external electronic device 120 in response to an input associated with the screen. For example, the wearable device 101 may transmit the signal 1332 to execute a function selected by the input to the external electronic device 120 based on the input received through the screen of the operation 1320. For example, the signal 1332 may include information to execute any one of applications installed in the external electronic device 120. For example, the signal 1332 may include the information to adjust the state (e.g., the state of WiFi and/or Bluetooth) of the external electronic device 120. For example, the signal 1332 may include information to execute a specific function (e.g., a payment function and/or an authentication function) supported by the external electronic device 120.

Referring to FIG. 13, in an operation 1340, according to an embodiment, the external electronic device 120 may execute at least one function based on the signal 1332 transmitted from the wearable device 101. The external electronic device 120 may identify the input of the operation 1330, based on the information included in the signal 1332. The external electronic device 120 may execute the function corresponding to the input among functions supported by the external electronic device 120. The external electronic device 120 may display a result executing the function and/or a user interface (UI) corresponding to the function through a display (e.g., the display 220-2 of FIG. 2).

As described above, according to an embodiment, the wearable device 101 may remotely control the external electronic device 120 based on the gaze of the user (e.g., the user 110 of FIG. 1) wearing the wearable device 101. For example, based on the direction of the gaze adjacent to the external electronic device 120 viewable through the display of the wearable device 101, the wearable device 101 may display the screen that is substantially the same as the screen displayed by the external electronic device 120, on the display of the wearable device 101. The user wearing the wearable device 101 may see the screen floating in an external space separated from the display of the external electronic device 120. The wearable device 101 may transmit the signal (e.g., the signal 1332 of FIG. 13) to control the function corresponding to the input to the external electronic device 120 based on the input for the screen.

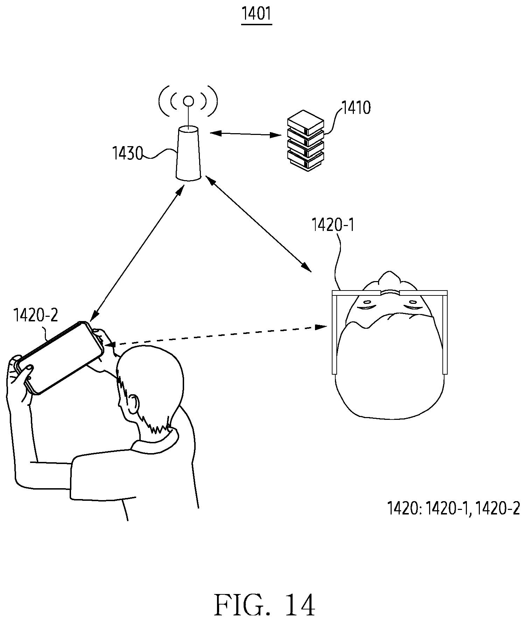

The operation of the wearable device 101 described above with reference to FIGS. 1 to 13 may be associated with a metaverse service provided through a network. Hereinafter, an example of the metaverse service provided to the user based on the wearable device 101 according to an embodiment will be described with reference to FIG. 14.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

FIG. 14 is an exemplary diagram of a network environment 1401 in which a metaverse service is provided through a server 1410.

Referring to FIG. 14, a network environment 1401 may include a server 1410, a user terminal 1420 (e.g., a first terminal 1420-1 and a second terminal 1420-2), and a network connecting the server 1410 and the user terminal 1420. In the network environment 1401, the server 1410 may provide a metaverse service to the user terminal 1420. The network may be formed by at least one intermediate node 1430 including an access point (AP) and/or a base station. The user terminal 1420 may access the server 1420 through the network and output a user interface (UI) associated with a metaverse service to a user of the user terminal 1420. Based on the UI, the user terminal 1420 may obtain information to be inputted into the metaverse service from the user, or output information (e.g., multimedia content) associated with the metaverse service to the user.

In this case, the server 1410 provides a virtual space so that the user terminal 1420 may perform activities in the virtual space. In addition, the user terminal 1420 may represent information provided by the server 1410 to the user by installing an S/W agent to access the virtual space provided by the server 1410, or transmit information that the user wants to represent in the virtual space to the server. The S/W agent may be provided directly through the server 1410, downloaded from a public server, or embedded and provided when purchasing a terminal.

In an embodiment, the metaverse service may provide a service to the user terminal 1420 and/or a user by using the server 1410. The embodiment is not limited thereto, and the metaverse service may be provided through individual contacts between users. For example, in the network environment 1401, the metaverse service may be provided by a direct connection between the first terminal 1420-1 and the second terminal 1420-2, independently of the server 1410. Referring to FIG. 14, in the network environment 1401, the first terminal 1420-1 and the second terminal 1420-2 may be connected to each other through a network formed by at least one intermediate node 1430. In an embodiment in which the first terminal 1420-1 and the second terminal 1420-2 are directly connected, any one of the first terminal 1420-1 and the second terminal 1420-2 may perform a role of the server 1410. For example, a metaverse environment may be configured only with a device-to-device connection (e.g., a peer-to-peer (P2P) connection).

In an embodiment, the user terminal 1420 (or the user terminal 1420 including the first terminal 1420-1 and the second terminal 1420-2) may be made in various form factors, and it is characterized by including an output device for providing an image and/or sound to the user and an input device for inputting information into the metaverse service. An exemplary user terminal 1420 in various form factors may include a smartphone (e.g., the second terminal 1420-2), an AR device (e.g., the first terminal 1420-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1430) includes all of various broadband networks including 3G, 4G, and 5G and short-range networks (e.g., a wired network or a wireless network that directly connects the first terminal 1420-1 and the second terminal 1420-2) including Wi-Fi and BT.

In an embodiment, the user terminal 1420 of FIG. 14 may include the wearable device 101 of FIGS. 1 to 11.

In an embodiment, based on an augmented reality and/or a mixed reality provided through a wearable device, a method of controlling an external electronic device adjacent to the wearable device may be required. As described above, according to an embodiment, the wearable device (e.g., the wearable device 101 of FIG. 2) may comprise communication circuitry (e.g., the communication circuitry 240-1 of FIG. 2), a camera (e.g., the camera 225 of FIG. 2), a display (e.g., the display 220-1 of FIG. 2), memory (e.g., the memory 215-1 of FIG. 2) storing instructions, and a processor (e.g., the processor 210-1 of FIG. 2). The instructions may be configured to, when executed by the processor, cause the wearable device to establish, by using the communication circuitry, a communication link with an external electronic device (e.g., the external electronic device 120 of FIG. 2) viewable through the display. The instructions may be configured to, when executed by the processor, cause the wearable device to obtain information with respect to a gaze toward a portion of the display by using the camera. The instructions may be configured to, when executed by the processor, cause the wearable device to display, in response to identifying the gaze adjacent to the external electronic device based on the information, a screen (e.g., the screen 150 of FIG. 1) for controlling the external electronic device. The instructions may be configured to, when executed by the processor, cause the wearable device to display, in the screen, a visual object associated with at least one function which is selected among a plurality of functions based on a position of the gaze with respect to the external electronic device. The instructions may be configured to, when executed by the processor, cause the wearable device to transmit, to the external electronic device through the communication link in response to identifying an input with respect to the visual object, a signal to control the at least one function. According to an embodiment, the wearable device may display the screen for controlling the external electronic device based on a position and/or a size of the external electronic device viewable to the user.

For example, the instructions may be configured to, when executed by the processor, cause the wearable device to display the screen at an area between the external electronic device viewable through the display and the position.

For example, the instructions may be configured to, when executed by the processor, cause the wearable device to select, among areas connected to edges of a portion of the display where the external electronic device is viewable, the at least one function among the plurality of functions based on an area including the position of the gaze.

For example, the instructions may be configured to, when executed by the processor, cause the wearable device to, based on identifying the gaze included in a first area connected to a first edge among the edges, display the screen in which a list of a plurality of applications executed by the external electronic device is included. The instructions may be configured to, when executed by the processor, cause the wearable device to, based on identifying the gaze included in a second area connected to a second edge among the edges, display the screen in which one or more notification messages occurred by the external electronic device are included.

For example, the instructions may be configured to, when executed by the processor, cause the wearable device to, based on identifying the gaze adjacent to at least one button included in the external electronic device, display another visual object to control a function mapped to the at least one button.

For example, the instructions may be configured to, when executed by the processor, cause the wearable device to transmit, to the external electronic device by using the communication link, another signal to display another visual object on another display of the external electronic device. The instructions may be configured to, when executed by the processor, cause the wearable device to, based on identifying the another visual object in an image obtained from the camera, identify at least one of a size or a direction of the external electronic device viewable through the display.

For example, the instructions may be configured to, when executed by the processor, cause the wearable device to, in a state identifying a direction of the external electronic device distinguished by a preset direction, obtain, based on transmitting the signal to execute the at least one function to activate the another display, another screen displayed on the another display by using the camera. The instructions may be configured to, when executed by the processor, cause the wearable device to display another visual object representing the another screen displayed along the preset direction, on the display.

For example, the instructions may be configured to, when executed by the processor, cause the wearable device to, in a state identifying a plurality of external electronic devices including the external electronic device by using the communication circuitry, display another visual object to select one of the plurality of external electronic devices.

As described above, according to an embodiment, a method of a wearable device may comprise establishing (e.g., the operation 510 of FIG. 5), by using communication circuitry of the wearable device, a communication link with an external electronic device viewable through a display of the wearable device. The method may comprise obtaining (e.g., the operation 520 of FIG. 5) information with respect to a gaze toward a portion of the display by using a camera of the wearable device. The method may comprise displaying (e.g., the operation 540 of FIG. 5), in response to identifying the gaze adjacent to the external electronic device based on the information, a screen for controlling the external electronic device. The method may comprise displaying (e.g., the operation 550 of FIG. 5), in the screen, a visual object associated with at least one function which is selected among a plurality of functions based on a position of the gaze with respect to the external electronic device. The method may comprise transmitting (e.g., the operation 560 of FIG. 5), to the external electronic device through the communication link in response to identifying an input with respect to the visual object, a signal to control the at least one function.

For example, the displaying the screen may comprise displaying the screen at an area between the external electronic device viewable through the display and the position.

For example, the displaying the visual object may comprise selecting, among areas connected to edges of a portion of the display where the external electronic device is viewable, at least one function among the plurality of functions based on an area including the position of the gaze.

For example, the displaying the screen may comprise, based on identifying the gaze included in a first area connected to a first edge among the edges, displaying the screen in which a list of a plurality of applications executed by the external electronic device is included. The method may comprise, based on identifying the gaze included in a second area connected to a second edge among the edges, displaying the screen in which one or more notification messages occurred by the external electronic device are included.

For example, the displaying the visual object may comprise, based on identifying the gaze adjacent to at least one button included in the external electronic device, displaying the visual object to control a function mapped to the at least one button.

For example, the establishing may comprise transmitting, to the external electronic device by using the communication circuitry, another signal to display another visual object on another display of the external electronic device. The establishing may comprise, based on identifying the another visual object in an image obtained from the camera, identifying at least one of a size or a direction of the external electronic device viewable through the display.

For example, the method may comprise, in a state identifying a direction of the external electronic device distinguished by a preset direction, obtaining, based on transmitting the signal to execute the at least one function to activate the another display, another screen displayed on the another display by using the camera. The method may comprise displaying another visual object representing the another screen displayed along the preset direction, on the display.

For example, the establishing may comprise, in a state identifying a plurality of external electronic devices including the external electronic device by using the communication circuitry, displaying another visual object to select one of the plurality of external electronic devices.

As described above, according to an embodiment, a wearable device may comprise communication circuitry, a camera, a display, memory storing instructions, and a processor. The instructions may be configured to, when executed by the processor, cause the wearable device to establish, by using the communication circuitry, a communication link with an external electronic device viewable through the display. The instructions may be configured to, when executed by the processor, cause the wearable device to display a first visual object associated with the external electronic device in an area extended from an edge of the external electronic device viewable through the display. The instructions may be configured to, when executed by the processor, cause the wearable device to, in response to identifying a gaze toward the first visual object by using the camera, display a second visual object representing a screen provided by the external electronic device in the area. The instructions may be configured to, when executed by the processor, cause the wearable device to transmit, to the external electronic device through the communication link, in response to an input with respect to the second visual object, a signal to display the screen on a display of the external electronic device.

For example, the instructions may be configured to, when executed by the processor, cause the wearable device to, in response to identifying the gaze toward the first visual object, display the second visual object in the area, including a plurality of screens provided by different applications executed by an external electronic device. The instructions may be configured to, when executed by the processor, the wearable device to transmit, to the external electronic device in response to the input indicating selection of a screen included in the second visual object, the signal to execute an application corresponding to the screen selected by the input.

For example, the instructions may be configured to, when executed by the processor, the wearable device to display the second visual object having a size of a display of the external electronic device viewable through the display.

For example, the instructions may be configured to, when executed by the processor, the wearable device to display a third visual object in another area extending from another edge distinguished by the edge. The instructions may be configured to, when executed by the processor, the wearable device to display, in the another area in response to identifying the gaze toward the third visual object, a fourth visual object representing a control panel to adjust the state of the external electronic device.

As described above, according to an embodiment, a method of a wearable device may comprise establishing, by using communication circuitry of the wearable device, a communication link with an external electronic device viewable through a display of the wearable device. The method may comprise displaying a first visual object associated with the external electronic device in an area extended from an edge of the external electronic device viewable through the display. The method may comprise, in response to identifying a gaze toward the first visual object by using a camera of the wearable device, displaying a second visual object representing a screen provided by the external electronic device in the area. The method may comprise transmitting, to the external electronic device through the communication link, in response to an input with respect to the second visual object, a signal to display the screen on a display of the external electronic device.

For example, the displaying the second visual object may comprise, in response to identifying the gaze toward the first visual object, displaying the second visual object in the area, including a plurality of screens provided by different applications executed by the external electronic device. The transmitting may comprise, to the external electronic device in response to the input indicating selection of a screen included in the second visual object, transmitting the signal to execute an application corresponding to the screen selected by the input.

For example, the displaying the second visual object may comprise displaying the second visual object having a size of a display of the external electronic device viewable through the display.

For example, the method may comprise displaying a third visual object in another area extending from another edge distinguished by the edge. The method may comprise, in the another area in response to identifying the gaze toward the third visual object, displaying a fourth visual object representing a control panel to adjust a state of the external electronic device.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
communication circuitry;
a camera;
a display;
memory storing instructions; and
a processor, wherein the instructions, when executed by the processor, cause the wearable device to:
establish, by using the communication circuitry, a communication link with an external electronic device viewable through the display;
obtain information with respect to a gaze toward a portion of the display by using the camera;
display, in response to identifying the gaze adjacent to the external electronic device based on the information, a screen for controlling the external electronic device;
display, in the screen, a visual object associated with at least one function which is selected among a plurality of functions based on a position of the gaze with respect to the external electronic device; and
transmit, to the external electronic device through the communication link in response to identifying an input with respect to the visual object, a signal to control the at least one function.

2. the wearable device of claim 1, wherein the instructions, when executed by the processor, cause the wearable device to:
display the screen at an area between the external electronic device viewable through the display and a position of the gaze.

3. the wearable device of claim 1, wherein the instructions, when executed by the processor, cause the wearable device to:
select, among areas connected to edges of a portion of the display where the external electronic device is viewable, the at least one function among the plurality of functions based on an area including the position of the gaze.

4. the wearable device of claim 3, wherein the instructions, when executed by the processor, cause the wearable device to:
based on identifying the gaze included in a first area connected to a first edge among the edges, display the screen in which a list of a plurality of applications executed by the external electronic device is included;
based on identifying the gaze included in a second area connected to a second edge among the edges, display the screen in which one or more notification messages occurred by the external electronic device are included.

5. the wearable device of claim 1, wherein the instructions, when executed by the processor, cause the wearable device to:
based on identifying the gaze adjacent to at least one button included in the external electronic device, display another visual object to control a function mapped to the at least one button.

6. the wearable device of claim 1, wherein the instructions, when executed by the processor, cause the wearable device to:
transmit, to the external electronic device by using the communication link, another signal to display another visual object on another display of the external electronic device;
based on identifying the another visual object in an image obtained from the camera, identify at least one of a size or a direction of the external electronic device viewable through the display.

7. The wearable device of claim 6, wherein the instructions, when executed by the processor, cause the wearable device to:
in a state identifying a direction of the external electronic device distinguished by a preset direction, obtain, based on transmitting the signal to execute the at least one function to activate the another display, another screen displayed on the another display by using the camera;
display another visual object representing the another screen displayed along the preset direction, on the display.

8. the wearable device of claim 1, wherein the instructions, when executed by the processor, cause the wearable device to:
in a state identifying a plurality of external electronic devices including the external electronic device by using the communication circuitry, display another visual object to select one of the plurality of external electronic devices.

9. A method of a wearable device, comprising:
establishing, by using communication circuitry of the wearable device, a communication link with an external electronic device viewable through the display of the wearable device;
obtaining information with respect to a gaze toward a portion of the display by using a camera of the wearable device;
displaying, in response to identifying the gaze adjacent to the external electronic device based on the information, a screen for controlling the external electronic device;
displaying, in the screen, a visual object associated with at least one function which is selected among a plurality of functions based on a position of the gaze with respect to the external electronic device; and
transmitting, to the external electronic device through the communication link in response to identifying an input with respect to the visual object, a signal to control the at least one function.

10. The method of claim 9, wherein the displaying the screen comprising:
displaying the screen at an area between the external electronic device viewable through the display and the position of the gaze.

11. The method of claim 9, wherein the displaying the visual object comprising:
selecting, among areas connected to edges of a portion of the display where the external electronic device is viewable, at least one function among the plurality of functions based on an area including the position of the gaze.

12. The method of claim 11, wherein the displaying the screen comprising:
based on identifying the gaze included in a first area connected to a first edge among the edges, displaying the screen in which a list of a plurality of applications executed by the external electronic device is included;
based on identifying the gaze included in a second area connected to a second edge among the edges, displaying the screen in which one or more notification messages occurred by the external electronic device are included.

13. The method of claim 9, wherein the displaying the visual object comprising:
based on identifying the gaze adjacent to at least one button included in the external electronic device, displaying the visual object to control a function mapped to the at least one button.

14. The method of claim 9, wherein the establishing comprising:
transmitting, to the external electronic device by using the communication circuitry, another signal to display another visual object on another display of the external electronic device;
based on identifying the another visual object in an image obtained from the camera, identifying at least one of a size or a direction of the external electronic device viewable through the display.

15. The method of claim 9, further comprising:
in a state identifying a direction of the external electronic device distinguished by a preset direction, obtaining, based on transmitting the signal to execute the at least one function to activate the another display, another screen displayed on the another display by using the camera;
displaying another visual object representing the another screen displayed along the preset direction, on the display.
